(19) Europäisches Patentamt / European Patent Office / Office européen des brevets

(11) **EP 4 436 911 B1**

(12) **EUROPEAN PATENT SPECIFICATION**

(45) Date of publication and mention
of the grant of the patent:
**31.12.2025   Bulletin 2026/01**

(21) Application number: **22823164.3**

(22) Date of filing: **23.11.2022**

(51) International Patent Classification (IPC):
**B82B 1/00** (2006.01)

(52) Cooperative Patent Classification (CPC):
**H01M 14/00; H01M 4/581; G06N 10/40**

(86) International application number:
**PCT/IT2022/050299**

(87) International publication number:
**WO 2023/095178 (01.06.2023 Gazette 2023/22)**

(54) **QUANTUM BATTERY AND CHARGING AND DISCHARGING METHOD THEREOF**

QUANTENBATTERIE UND LADE- UND ENTLADEVERFAHREN DAFÜR

BATTERIE QUANTIQUE ET SON PROCÉDÉ DE CHARGE ET DE DÉCHARGE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority:   **24.11.2021   IT 202100029696**

(43) Date of publication of application:
**02.10.2024   Bulletin 2024/40**

(73) Proprietor: **PLANCKIAN S.R.L.**
**56125 Pisa (PI) (IT)**

(72) Inventors:
• **GIOVANNETTI, Vittorio**
**56127 PISA (PI) (IT)**
• **POLINI, Marco**
**56017 SAN GIULIANO TERME (PI) (IT)**

(74) Representative: **Hoffmann Eitle**
**Patent- und Rechtsanwälte PartmbB**
**Arabellastraße 30**
**81925 München (DE)**

(56) References cited:
**US-A1- 2020 287 117**

• **DAVIDE ROSSINI ET AL: "Quantum advantage in the charging process of Sachdev-Ye-Kitaev batteries", ARXIV.ORG, CORNELL UNIVERSITY LIBRARY, 201 OLIN LIBRARY CORNELL UNIVERSITY ITHACA, NY 14853, 3 December 2020 (2020-12-03), XP081828438, DOI: 10.1103/ PHYSREVLETT.125.236402**
• **SERGI JULIA-FARRE ET AL: "Bounds on the capacity and power of quantum batteries", ARXIV.ORG, CORNELL UNIVERSITY LIBRARY, 201 OLIN LIBRARY CORNELL UNIVERSITY ITHACA, NY 14853, 9 November 2018 (2018-11-09), XP081657665, DOI: 10.1103/ PHYSREVRESEARCH.2.023113**
• **CHANG-KANG HU ET AL: "Optimal charging of a superconducting quantum battery", ARXIV.ORG, CORNELL UNIVERSITY LIBRARY, 201 OLIN LIBRARY CORNELL UNIVERSITY ITHACA, NY 14853, 9 August 2021 (2021-08-09), XP091030809**

**Description**

The present invention relates to a quantum battery and charging and discharging method thereof.

**Field of the invention**

More specifically, the invention concerns a quantum battery for storing energy in an effective way, designed and realized in particular for applications that can be used for any industrial as well as domestic applications.

In the following, the description will be addressed mainly to quantum batteries to be applied to quantum computing systems, but it is clear that the same should not be considered limited to this specific use.

**Prior art**

As it is well known, in the last few decades, batteries have led the revolution in personal electronics and are steadily gaining an increasing importance also in the automotive sector (see [1]). Currently available batteries operate on the basis of electrochemical principles that have been developed between the Eighteenth and Nineteenth centuries (see [2]).

An ordinary electrochemical battery comprises an anode, a cathode, a liquid electrolyte, and a porous separator. Motivated by the high energy density offered by a lithium-metal anode (see [3]), several research groups and companies (see [4]) have proposed and fabricated electrochemical batteries with a solid-state separator (and a lithium-metal anode), which have been dubbed "solid-state batteries" (SSBs).

In general, finding suitable materials for fabricating the solid-state separator has proven challenging, mainly because candidate materials are required to have a *high dendrite resistance.*

In general, currently available batteries have several drawbacks, which are shortly discussed in the following.

A first drawback of the available batteries is that they require a remarkable amount of time for their charging process. Also, the batteries mainly used in the industry comprise liquid parts, which, beside increasing the weight, are usually toxic. This is also a problem for the disposal after the battery life, in view of the current attention to the development of green technologies.

From an operative point of view, the current batteries cannot be integrated inside quantum computing architectures. Ordinary electrochemical batteries, for example, cannot be integrated inside superconducting quantum computers, in view of the ultralow operation temperatures of the latter.

In addition, ordinary electrochemical batteries are not suitable for space technologies, mainly for reasons connected to operating temperatures. Specifically, satellites moving through interstellar space need battery packs that are heated while the satellite itself is operating in conditions of poor sun irradiation.

It is clear that currently available batteries are not suitable to be used for supplying current and future technologies.

To address the above technical limitations, quantum batteries have been recently proposed in the recent literature. Genuine quantum effects, such as phase coherence and entanglement, constitute remarkable resources, which have been shown to lead to a superior performance of technological devices of various sorts, provided that they are properly manipulated and engineered. A known example is that of a quantum computer, whereby computations are performed with the use of quantum bits (QUBITs) as compared to classical computing performed with classical bits (see [5]).

Technological research is currently focused on investigating whether genuine quantum resources can help achieving superior performances in the manipulation and processing of energy (see [6]). The term "Quantum battery" has been coined (see [7] and [8]) in such technical context of quantum thermodynamics research. In particular, it has been proposed that "entangling unitary controls", i.e. unitary operations acting globally on the state of the N quantum cells, lead to better work extraction capabilities from a quantum battery, when compared to unitary operations acting on each quantum cell separately. In other words, it has been demonstrated (see [9]) that entanglement generation leads to a speed-up in the process of work extraction, thereby leading to larger delivered power. Then, the charging (rather than the discharging) process has been studied (see [10, 11]) and two types of charging schemes have been identified:

(i) the so-called parallel charging scheme, in which each of the N quantum cell is acted upon independently of the others; and
(ii) the collective charging scheme, where global unitary operations (i.e., the entangling unitary controls) acting on the full Hilbert space of the N quantum cells are allowed. Specifically, it has been shown that, in the collective charging case and for $N \geq 2$, the charging power of a quantum battery is larger than in the parallel scheme. This collective speed-up, stemming from the entanglement produced in the non-equilibrium dynamics accompanying the charging process of a quantum battery, has been named "quantum advantage".

All the early pioneering studies cited above (i.e. [7-11]) contained abstract quantum-information theorems. The situation changed in 2018. Indeed, in the quest for such quantum advantage and potential laboratory implementations of quantum batteries, the abstract concepts of quantum cell and "entangling operations" were put on a concrete ground by other authors (see [12]). These researchers proposed the concept of a "Dicke quantum battery", where an array of N qubits (i.e., the proper battery, where energy is actually stored) is coupled to a harmonic energy source (see [12-15]). Since then, many other quantum battery models have been proposed, including quantum batteries based on deterministic spin chains (see [16]), disordered spin chains (see [17, 18]), and organic compounds (see [19]).

More recently, a model quantum battery based on the so-called "SYK model" has been proposed (see [20]).

Further, another type of quantum mechanical battery has been recently proposed (see [21]). It was in particularly dubbed "Josephson phase battery", but this quantum device does not store energy. Rather, it maintains a constant phase difference between two points in a superconducting circuit.

In addition, mathematical details pertaining to specific quantum battery models are discussed in a series of scientific publications (see [12-15,17,20]).

Based on the above, there is not yet available a satisfactory quantum battery in the market, capable of the performances required by the applications to the industry sector and, in general, by practical applications.

## Scope of the invention

In light of the above, scope of the present invention is that of proposing a battery capable of overcoming the drawbacks of the ordinary available batteries as well as the currently available quantum batteries.

Another purpose of the invention is to propose fast charging batteries.

An additional proposal of the present invention is to propose a quantum battery that can operate in an ultra-wide temperature range.

## Object of the invention

It is, therefore, object of the present invention a quantum battery for storing and supplying energy, comprising one or more clusters for storing energy, each one comprising at least one quantum cell, wherein each quantum cell has one or more quantum energy units, wherein each quantum energy unit is a quantum system having a plurality of energy levels to store energy.

Always according to the invention, said quantum energy unit may be a QUBIT as two-energy level quantum system, or a QUTRITs as three-energy level quantum system, or a QUDIT as a quantum system with a discrete number of energy levels.

Further according to the invention, each one of said quantum cells may comprise a plurality of quantum energy units, and an inner quantum bus, operable for causing mutual interactions between said quantum energy units inside each quantum cell, wherein said inner quantum bus is a quantum mechanical system, and wherein each quantum energy unit couples with said inner quantum bus of the corresponding quantum cell, under resonant conditions.

Still according to the invention, each quantum cell may comprise a first control line, which is adjustable by an external control, for adjusting the charging process of each quantum cell.

Advantageously according to the invention, said inner quantum bus have a discrete energy spectrum comprising a finite collection of frequencies $\{\omega_B\}$, wherein said finite collection of frequencies $\{\omega_B\}$ can be modified by said first control lines.

Always according to the invention, the resonant condition may occur when said first control line allows that one of frequencies $\{\omega_B\}$ of the discrete energy spectrum of said inner quantum bus is in resonance with one of the level-spacings of the energy spectrum of one of the quantum energy units, so as to allow for an energy exchange among the inner quantum bus and the corresponding quantum energy units within a relevant quantum cell, and the energy flow from said quantum battery is inhibited by setting the frequencies $\{\omega_B\}$ off-resonant with respect to the energy spectrum of the quantum energy units.

Still according to the invention, said quantum battery may comprise a plurality of clusters, and one or more outer quantum bus, wherein each outer quantum bus is connected to at least one of said clusters, to couple the quantum cells of said clusters, wherein each outer quantum bus is connectable to at least one external power sources, for charging the quantum energy units, and/or to at least one load, to be supplied by the energy stored in said quantum energy units, and wherein said outer quantum bus is operable to charge and discharge the quantum energy units of the quantum cells contained in said clusters.

Further according to the invention, each outer quantum bus may be connectable to said at least one external power sources and/or to said at least one load through electrodes.

Advantageously according to the invention, said outer quantum bus may have a continuous energy spectrum.

Always according to the invention, said outer quantum bus may be a waveguide, wherein the propagating electromagnetic modes of the waveguide connects said quantum cells. Advantageously according to the invention, the quantum battery may comprise second control line to control said outer quantum bus, implemented with voltage/magnetic pulses, for tuning the interactions between said outer quantum bus and said inner quantum bus.

Still according to the invention, said quantum energy unit may be a quantum dot, and said quantum cell may be an electromagnetic cavity.

Further according to the invention, said electromagnetic cavity may be a Fabry-Pérot resonator, the inner quantum bus may be operated by the modes of the quantized cavity electromagnetic field, and the outer quantum bus may be operated by the electromagnetic modes propagating in wave guides, which connect together the quantum cells.

Advantageously according to the invention, each cluster may comprise a plurality of quantum cells, and each cell may comprise a plurality of quantum energy units.

Preferably according to the invention, said clusters may be arranged in a network selected among the following: a linear network; a snake-like network; or in a three-dimensional network, as a stack of two-dimensional interconnected quantum cells.

Always according to the invention, said cluster may have a planar square geometry.

Still according to the invention, each of said quantum energy units may be a fully tunable artificial metallic macro-atoms, each one having a ground state and at least excited state, each one of said quantum cell may be built by a discrete set of fully tunable artificial metallic macro-atoms, and said inner quantum bus may comprise an electromagnetic cavity or resonator, where each of said quantum cells is contained, wherein a quantized microwave radiation field is contained in said electromagnetic cavity or resonator.

Further according to the invention, said quantum energy unit may be a transmon-type superconducting QUBITs embedded in a coplanar waveguide resonator.

Preferably according to the invention, the transmon may be made of aluminum and/or Yttrium barium copper oxide - YBCO.

Advantageously according to the invention, said artificial atoms may be made of semiconducting materials, wherein said semiconducting materials are selected among the following: silicon quantum dots; gallium arsenide quantum dots; cadmium selenide (CdSe) quantum dots; and carbon nanotube quantum dots.

Still according to the invention, said semiconducting quantum dots may host both charge and spin.

It is also specific object of the present invention a method for charging and discharging a quantum battery, wherein said quantum battery comprises: one or more clusters, each one comprising at least one quantum cell, wherein each quantum cell has one or more quantum energy units having a plurality of energy levels to store energy; a first control line; and an inner quantum bus, which couples with said inner quantum bus of the corresponding quantum cell, under resonant conditions said inner quantum bus, wherein said inner quantum bus has a discrete energy spectrum comprising a finite collection of frequencies, wherein said finite collection of frequencies can be modified by said first control lines; wherein the battery charging comprises the steps of applying a resonant excitation between the inner quantum bus and the quantum energy units of the quantum cells by said first control line such that one of frequencies $\{\omega_B\}$ of the discrete energy spectrum of an inner quantum bus is in resonance with one of the level-spacings of the energy spectrum of an individual quantum energy units, to allow an energy exchange.

Always according to the invention, said method may comprise the step of using said second control line to connect at least two clusters of quantum energy units via an outer quantum bus, to allow for energy exchange between the said clusters, wherein said at least one an outer quantum bus is connectable to at least one external power sources, for charging the quantum energy units, and/or to at least one load, to be supplied by the energy stored in said quantum energy units.

Further according to the invention, said method may comprise the step of setting the frequencies $\{\omega_B\}$ off-resonant with respect to the energy spectrum of the quantum energy units, so as to inhibit the energy flow.

## Brief description of the figures

The present invention will be now described, for illustrative but not limitative purposes, according to its preferred embodiments, with particular reference to the figures of the enclosed drawings, wherein:

figure 1 illustrates a schematic of a first embodiment of a quantum battery according to the present invention;
figure 2 illustrates a quantum cell of the quantum battery of figure 1;
figure 3 illustrates a second embodiment of the quantum battery according to the present invention;
figure 4 illustrates a third embodiment of the quantum battery according to the present invention;
figure 5 illustrates a fourth embodiment of the quantum battery according to the present invention;
figure 6 illustrates a fifth embodiment of the quantum battery according to the present invention; and
figure 7 illustrates a sixth embodiment of the quantum battery according to the present invention.

**Detailed description**

In the various figures, similar parts will be indicated by the same reference numbers.

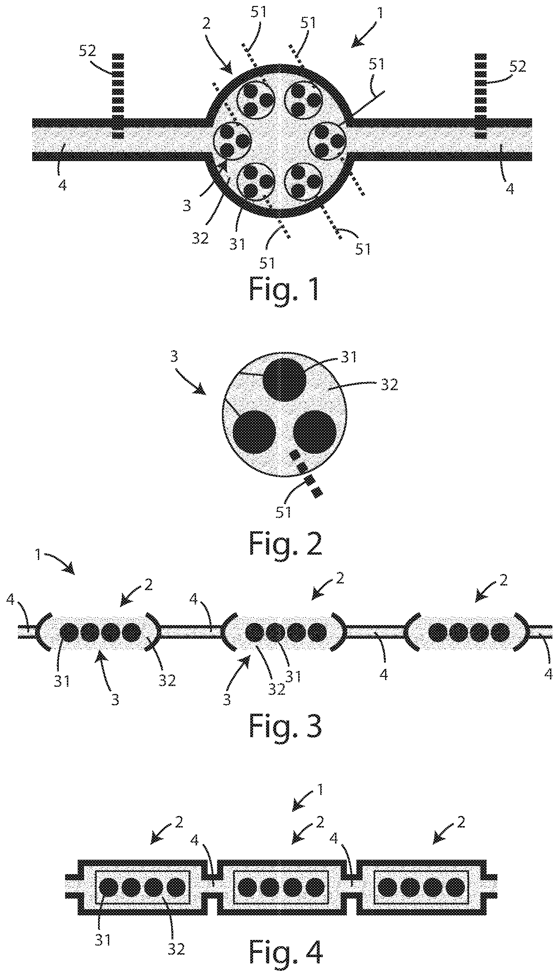

Referring to figures 1 and 2, a first embodiment of a quantum battery 1 according to the present invention is shown.

The quantum battery 1 comprises one cluster 2 of quantum cells 3, wherein each quantum cell 3 is interconnected with each other, as better specified below.

In some embodiments, the clusters 1 can be more than one and arranged in a two-dimensional or a three-dimensional network, as better explained and discussed below.

Each quantum cell 3 comprises a plurality of more fundamental quantum energy units 31. Each quantum energy unit 31 can be a quantum bit or QUBIT, namely a 2-energy level quantum system, a quantum trit or QUTRIT, namely a 3-energy level quantum system, or, in general, a quantum dit or QUDIT, namely a d-energy level quantum system.

In the embodiment shown, each quantum cell 3 comprises three quantum energy units 31. In other embodiments, a different number of quantum energy units 31 can be implemented.

In a general quantum battery 1, there is a collection of $N_{CELL}$ quantum cells 3, and each quantum cell 3 comprises a collection of $N$ quantum energy units 31.

In figure 1, where the first embodiment of the quantum battery 1 is illustrated, $N_{CELL} = 6$ and $N = 3$. In general, these two quantities can take any integer value larger than or equal to 1. The quantum energy units 31 are nominally identical quantum mechanical, non-interacting systems, each characterized by internal degrees of freedom, which, in the absence of mutual interactions, allow them to store energy in an ordered sequence of (say) $d \geq 2$ discrete levels $\varepsilon_{d-1} \geq \cdots \geq \varepsilon_1 \geq \varepsilon_0 = 0$, with $\varepsilon_0 = 0$ representing the ground level of the quantum energy unit 31 and $\varepsilon_{d-1}$ the corresponding maximum energy value.

For $d = 2$, the quantum energy units 31 can hence be identified with 2-energy level quantum systems, i.e. QUBITs; for $d = 3$ with QUTRITs; while for generic (integer) $d$ the quantum energy unit coincides with a QUDIT.

In a real implementation, the quantum energy units 31 do not need to be identical but there can be differences. For example, the energy spacing between two consecutive levels might not be the same for all quantum energy units 31. These "inhomogeneities" do not affect the fast-charging properties of the quantum battery 1 according to the invention.

Each quantum cell 3 comprises an inner quantum bus 32, which connects the quantum energy units 31 contained in a quantum cell 3 with each other.

The inner quantum bus 32 is also a quantum mechanical system that mediates the effective mutual interactions between all the quantum energy units 31 inside a given quantum cell 3. With the term "mediate" it is meant the fact that the inner quantum bus 32, through an external electric or magnetic field, allows the energy transmission among the quantum energy units 31 hence inducing mutual interactions between them. These interactions are responsible for ultrafast charging of a single quantum cell 3.

Also, each quantum cell 3 comprises a first control line 51, particularly a classical control line, based for example on a voltage/magnetic field control, which can be externally adjusted, for tuning, as better explained below, the charging process of each quantum cell 3.

The quantum battery 1 comprises also an outer quantum bus 4, which is a secondary quantum medium. The outer quantum bus 4 allows the interaction of the different quantum cells 3.

Depending on the specific implementation, the outer quantum bus 4 may or may not coincide with the inner quantum bus 32. The outer quantum bus 4 plays two roles. On one hand, via the action of a dedicated second classical control line 52 which also in this case can be implemented with voltage/magnetic pulses, the outer quantum bus 4 is the medium that enables the coupling between the various quantum cells 31. On the other hand, the outer quantum bus 4 operates as a charging and discharging channel for the quantum battery 1, allowing the energy to be moved-in and/or moved-out from the battery system. This is therefore akin to the role played by an electrical source (i.e., the electrical current) for an ordinary electrochemical battery, when the battery is coupled to a power source or load.

Each quantum battery 1 is also characterized by the quantum degrees of freedom of the medium that surrounds the quantum energy unit 31 inside a given quantum cell 3, namely said inner quantum bus 32, and by the medium that instead couples the various quantum cells 3 inside the quantum battery 1, namely said outer quantum bus 4.

The main difference between the inner quantum bus 32 and the outer quantum bus 4 is associated with their spectral properties. More specifically, while the outer quantum bus 4 can have a continuous energy spectrum, the inner quantum bus 32 is assumed to have a discrete energy spectrum identified by a finite collection of frequencies $\{\omega_B\}$, which can be modified by the first control line 51. For instance, in a practical implementation of a quantum battery 1, better disclosed below, the inner quantum bus 32 can be identified with modes of the quantized electromagnetic field associated with a high-quality resonator (or a cavity) that hosts the associated quantum energy units 31. Similarly, the outer quantum bus 4 can be associated with the propagating electromagnetic modes of a wave guide, which connects the various quantum cells 3 of the quantum battery 1, as can be better seen in figure 2.

The role of the inner quantum bus 32 is that of acting as a mediator for the interactions between the various quantum energy units 31 that compose a given quantum cell 3, as well as to allow for energy transfer from and to the quantum energy units 31. This is made possible due to the presence of an interaction Hamiltonian that couples each quantum energy unit 31 with the inner quantum bus of the corresponding quantum cell 3, under resonant conditions.

Resonant condition occurs when the first control line 51 in figure 1 is such that one of frequencies $\{\omega_B\}$ of the discrete energy spectrum of the inner quantum bus 32 is in resonance with, i.e. equal to, one of the level-spacings of the energy spectrum of the individual quantum energy units 31.

Such interactions allow for an effective energy exchange among the inner quantum bus 32 and the corresponding quantum energy units 31 within a quantum cell 3. On the contrary, by setting the frequencies $\{\omega_B\}$ in such a way to be off-resonant with respect to the energy spectrum of the quantum energy units 31, energy flow is inhibited, resulting in an effective energetic isolation of the quantum energy units 31 from the surrounding medium, leaving aside intrinsic losses which can be minimized in a variety of ways, depending on the actual implementation.

The function of the outer quantum bus 4, instead, is that of acting as a mediator for the interactions among the various quantum cells 3, and also as a connector between the quantum battery 1 and the external environment or systems, e.g., power sources and loads. In this case, this is made possible due to the presence of "exchange" (beam-splitter like) interactions between the outer quantum bus 4 and the inner quantum bus 32, which allow for energy flow among them and are externally tunable via the dedicated second control lines 52, which, as mentioned is a classical control line.

Finally, said outer quantum bus 4 allows varying the geometry of the quantum battery 1 by allowing alternative topological configurations, according to the necessities, which originate from how various quantum cells 3 are arranged in real space.

Similarly, to what happens in conventional quantum computing architectures, classical control lines, such as the first 51 and the second 52 control lines in scheme described above are responsible for the generation of electrical and magnetic signals that bias the dynamical evolution of the quantum hardware of the setup.

While the specific nature and form of such controls strongly depend on the implementations under consideration, at the fundamental level they typically leveraged on the Zeeman effect, the Stark effect, and on the Coulomb repulsion effect. It is recalled that the first two of such effects are associated with the possibility of influencing energy spectral lines of a quantum system through the action of external magnetic or electric fields respectively. The above control techniques are routinely applied in Nuclear Magnetic Resonances [59], in ion traps [60, 61], in N-V centers in diamond [62], as well as in superconducting qubits implementations [63, 64, 65].

External electric fields can also be used to induce control on the system by tuning the reflectivity and the transmissibility of waves guides that act as quantum buses 4 among the various quantum energy units of the setup [see 78, 79].

Coulomb repulsion is instead often employed in low-dimensional semiconductor devices (e.g., a GaAs/(Al,Ga) As heterojunction, a Si/SiGe heterojunction, or a Si-metal-oxide semiconductor (MOS) structure [66, 67]) as a method to tune quantum tunnel or to activate/disactivate electron-electron coupling among adjacent quantum dots via the action of external potential gates that are superimposed on the devices.

The operation of the quantum battery 1 described above is as follows.

To better describe the operation of the quantum battery 1, the charging and discharging processes are disclosed. In particular, it is adopted the conventional Dirac notation (see [22]), indicating with $|\varepsilon_0\rangle_{A_{j,k}}$, $|\varepsilon_1\rangle_{A_{j,k}}$,..., $|\varepsilon_{d-1}\rangle_{A_{j,k}}$ the energy eigenstates associated with energy levels of the of the j-th quantum energy unit 31 of the $k$-th quantum cell 3. It is denoted by

$$H_{A_{j,k}} = \sum_{\ell=0}^{d-1} \epsilon_\ell |\epsilon_\ell\rangle_{A_{j,k}} \langle \epsilon_\ell | \qquad (1)$$

the associated Hamiltonian operator, which defines its energy spectrum. When all the quantum energy units 31 of the $k$-th quantum cell 3 are in the ground state, the joint state of such quantum cell 3 is described by the quantum mechanical vector (in the Hilbert state)

$$|\Psi_0\rangle_{A_k} = |\epsilon_0\rangle_{A_{1,k}} \otimes |\epsilon_0\rangle_{A_{2,k}} \otimes ... \otimes |\epsilon_0\rangle_{A_{N,k}} \qquad (2)$$

which represents the special configuration where no energy is stored in the device. Any other configuration $|\Psi\rangle_{A_k}$ different from $|\Psi_0\rangle_{A_k}$ corresponds to the case where the k-th quantum cell 3 of the quantum battery 1 is instead charged or partially charged.

The average amount of energy stored in the k-th quantum cell 3 is provided by the quantum mechanical expectation value

$$E_k(\Psi) =_{A_k} \langle \Psi | H_{A_k} | \Psi \rangle_{A_k} \qquad (3)$$

With

$$H_{A_k} = \sum_{j=1}^{N} H_{A_{j,k}} \qquad (4)$$

being the total Hamiltonian of the k-th quantum cell 3. Accordingly, any process that, in a time interval $T$, leads to a transition from $|\Psi_0\rangle_{A_k}$ to a state $|\Psi\rangle_{A_k} \neq |\Psi_0\rangle_{A_k}$ represents a charging operation for the quantum battery 1. Thus in such time interval $T$, an amount $E_k(\Psi)$ of energy is loaded into the device, namely into the quantum battery 1.

Similarly, any reverse procedure where the quantum battery 1 "moves" from $|\Psi\rangle_{A_k}$ towards $|\Psi_0\rangle_{A_k}$ in a time interval $T'$, represents a discharging operation of duration T', during which the quantum battery 1 has released an energy $E_k(\Psi)$.

As mentioned above, the energy flows from and into the quantum energy units 31 of a given quantum cell 3 due to said inner 32 and outer 4 quantum buses.

More in detail, the charging process of a quantum battery 1 formed by $N_{CELL}$ quantum cells 3 is disclosed, each containing $N$ quantum energy units 31. It is assumed that, initially, the quantum battery 1 contains no energy, neither in the quantum energy units 31, nor in the surrounding media, namely the inner quantum bus 32 and the outer quantum bus 4. Accordingly, the joint state of the whole system (quantum cells 3, quantum cells 3 and the inner quantum bus 32 and the outer quantum bus 4) is described as

$$|\Psi_0\rangle_{A_1} \otimes |\Psi_0\rangle_{A_2} \otimes \ldots \otimes |\Psi_0\rangle_{A_{N_{CELL}}} \otimes |0\rangle_{\text{Inner QUBUS}} \otimes |0\rangle_{\text{Outer QUBUS}} \qquad (5)$$

with $|0\rangle_{\text{QUBUS-I}}$ and $|0\rangle_{\text{QUBUS-II}}$ representing the vacuum energy states of the inner quantum bus 32 and outer quantum bus 4, respectively.

In order to charge the quantum system, namely the quantum battery 1, a certain amount of energy (for example, in the form of electromagnetic energy) is loaded into the outer quantum bus 4 by an external power source, whose net effect is to move it away from $|0\rangle_{\text{Outer QUBUS}}$.

By means of the second classical control lines 52, the energy transfer from the outer quantum bus 4 into the individual media inner quantum bus 32 is allowed, by forcing resonant conditions between the latter and the quantum energy units 31 via the first classical control lines 51. This causes the transferring of excitations from inner quantum bus 32 to the quantum energy units 31 while at the same time inducing an effective interaction between the individual quantum energy units 31 that speeds-up, in a collective fashion, the whole process.

This collective speed-up, which is partly due to the many-body nature of the problem (i.e., due to the fact that all quantum energy units 31 interact via effective interactions mediated by the quantum buses) and partly due to entanglement generation during the non-equilibrium dynamics, is what makes our quantum batteries 1 more performing with respect to ordinary electrochemical batteries.

As verified in a series of theoretical and numerical calculations, quantum batteries 1 according to the invention display indeed a collective speed-up manifesting with a dramatically reduced charging time, which actually decreases with a power law as the total number of interacting quantum energy units 31 (upper bounded by the product $N_{CELL}N$) increases.

Referring to figures 3-7, different possible topologies of the quantum battery 1 according to the invention are illustrated.

In particular, figure 3 illustrates a second embodiment of the quantum battery according to the invention, which is a schematic representation of a quantum battery 1 composed by $N_{CELL}$ = 3 quantum cells 3, each containing N = 4 quantum energy units 31, implemented e.g. with quantum dots (black circles) hosted inside a high-quality electromagnetic cavity (such as a Fabry-Pérot resonator), acting as quantum energy unit 31.

In this embodiment, the modes of the quantized cavity electromagnetic field play the role of the inner quantum bus 32. The outer quantum bus 4 instead is represented by electromagnetic modes propagating in wave guides, which connect together the various quantum cells (i.e. cavities). In the figure 3 the first 51 and the second 52 classical control lines are not shown.

Figures 4, 5, 6, and 7 show a third, a fourth, a fifth and a sixth embodiment of the quantum battery 1 according to the invention, in one and two spatial dimensions.

More specifically, figure 4 shows a linear (one-dimensional) quantum battery 1 formed by $N_{CELL}$ = 3 quantum cells 3, each containing N = 4 quantum energy units 31, arranged in a linear network.

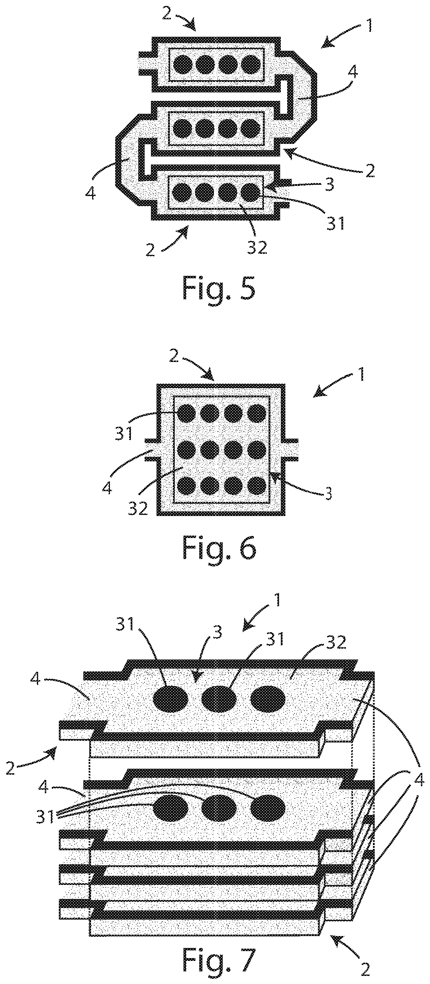

Figure 5 shows a snake-like quantum battery 1 realized with $N_{CELL}$ = 3 quantum cells 31, each containing $N$ = 4 quantum energy units, arranged, as said, in a snake-like geometry.

Figure 6 shows a planar (two-dimensional) quantum battery 1 realized with a single ($N_{CELL}$ = 1) quantum cell 3 containing $N$ = 12 quantum energy units 31 arranged in a planar square geometry. In other embodiments, other planar geometries can be envisioned.

Figure 7 shows an embodiment of a three-dimensional quantum battery 1. The three-dimensional quantum battery 1 formed by a stack of two-dimensional interconnected quantum cells 3 (containing a generic number $N_{CELL}$ of quantum cells 3), each containing $N$ = 3 quantum energy units 31. In the figure the first 51 and the second 52 classical control lines are not shown.

## Practical implementations: types of qubits, quantum buses, and materials

Three possible implementations of quantum batteries 1 are disclosed, or specifically, in a first embodiment it is disclosed a quantum battery based on metallic materials,-one based on semiconducting materials, and one based on semi-metallic materials.

As stated above, the quantum batteries 1 can however be built with any of the quantum technology platforms that are being currently studied and implemented, including those ones that are not based on solid state materials.

In addition, as mentioned above, the quantum batteries 1 according to the present invention can be build based on the architecture above, using neutral atoms and their Rydberg states, trapped ions, etc.

## Metallic QUCELLs

As mentioned above, the quantum batteries 1 according to the invention are clusters 2 of quantum cells 3 and each quantum cell is a collection of fundamental quantum energy units 31.

In the following, only quantum energy units 31 as a QUBIT are considered. Also, in this section a metallic quantum battery 1 is considered, wherein the inner quantum bus 32 coincides with outer quantum bus 4. For the sake of simplicity, we will therefore refer to a single quantum bus, which will be referred to as quantum bus.

A quantum cell 3 can be built by considering a discrete set of fully tunable artificial (two-level) metallic macro-atoms with a ground state $|g\rangle$ and an excited state $|e\rangle$, placed at fixed positions in space, inside a high-quality electromagnetic cavity (namely a cavity with reduced photon losses), usually called a "high-Q resonator", containing a quantized microwave radiation field.

In this case, and with reference to the general architecture described above, the artificial macro-atoms play the role of the QUBITs, while the quantized microwave radiation field plays the role of the quantum bus. Specifically, it is considered N transmon-type (see [23, 24]) superconducting QUBITs embedded in a coplanar waveguide resonator (such as the one described in figure 1 of [25]).

This kind of QUBITs can be manufactured with electron beam lithography and standard evaporation techniques (see, for example, [25] for the case of Al/AlO$_x$/Al).

The material used to fabricate a transmon is typically aluminum. Recent progress in fabrication techniques has led to the possibility to use granular aluminum (see [26, 27]) and Yttrium barium copper oxide - YBCO (see [28, 29]) to build superconducting qubits. In some embodiments the transmission can be fabricated with standard aluminum to jump start the fabrication of prototypes, but YBCO qubits can be realized, so as to build metallic batteries operating at higher temperatures than the critical temperature of superconducting aluminum.

In other words, it is noted that YBCO and other high-temperature superconducting materials offer unprecedented opportunities to fabricated transmon-based quantum batteries 1 operating at temperatures that are much higher than the critical temperature of superconducting aluminum.

For the transmon-type implementation of the quantum battery 1 we are discussing here, the classical control realized by the first 51 and/or the second 52 control lines corresponds to the possibility of tuning the frequency of the qubit elements by modifying either their Coulomb energy or their Josephson energy via properly selected voltage or flux biases (see e.g., [68]). The main purpose of such operations is to activate/de-activate resonance effects between the quantum battery elements and the transmission line cavity where they are embedded. Such effects can be formally achieved e.g., by using external microwave pulses [69], parametrically modulated couplers [70, 71], parametrically modulated qubits [73], gates implemented with tuneable-frequency qubit-qubit resonances [74, 75, 76] and gates implemented with tuneable couplings [77].

Let $L$ be the length of the resonator, which is usually taken to be on the order of 4 - 5 cm. An elementary quantum cell 3 of a metallic quantum battery 1 with such $L$ can contain up to $N$ = 6 QUBITs. Let $\omega_r$ be the angular frequency of the main mode of the resonator, so that $v_r = h\omega_r/(2\pi)$ is the frequency of the mode (typically in the range 5 - 7 GHz for a microwave resonator). Let $h\omega_{i,ge}$ be the energy separation between ground and excited state of the $i$-th qubit, $i$ being a discrete index running from $i$ = 1 to $i$ = $N$. When $\omega_{i,ge} = \omega_r$ each QUBIT is resonantly coupled to the inner quantum bus 32. When this resonant condition is satisfied, energy can flow from the microwave radiation field to the array of QUBITs, and the quantum cell 3 can be charged. When $\omega_{i,ge} \neq \omega_r$, each QUBIT of the elementary quantum cell 3 is said to be off resonance with respect to the inner quantum bus 32. In this case, the QUBITs and the quantum bus are decoupled. The condition $\omega_{i,ge} = \omega_r$ or $\omega_{i,ge} \neq \omega_r$ can be achieved via the application of a tiny external classical magnetic field, which plays the role of the classical control line mentioned above. By using typical physical parameters of aluminum-based transmons (see, e.g., [25]), the charging time $t_6$ of a quantum cell of 4 - 5 cm hosting $N = 6$ aluminum transmon QUBITs is on the order of $t_6 \simeq 5$ ns.

**Semiconducting quantum cells**

Artificial atoms can also be constructed by employing semiconducting rather than metallic materials. Several years of research have led to remarkable advances in nanofabrication techniques, which, in turn, have led to the possibility of building a variety of semiconductor-based "quantum dots".

Examples of such technologies include silicon quantum dots (see [30-33]), gallium arsenide quantum dots (see [34,35]), cadmium selenide (CdSe) quantum dots (see [36]), and carbon nanotube quantum dots (see [37,38]). Some of these, like silicon and carbon nanotube quantum dots, are biocompatible and may therefore play a pivotal role in the development of green quantum battery technologies. Semiconducting quantum dots can host both *charge* and *spin* QUBITs and they are a promising platform for the realization of a quantum computer.

Typical level spacings (i.e., energy difference between ground and main excited state) of semiconducting quantum dots tend to be higher than their metallic, transmon-type, counterparts.

For example, colloidal quantum dots such as core-shell CdSe dots (see [36]) have typical level spacings of hundreds of Terahertz (THz) (3 THz correspond to ~ 12.4 meV). Quantum dots with these level spacings and quantum dots with even larger spacings have three main advantages for the quantum battery 1 technology:

-    They lead to quantum batteries 1 that can operate at much larger temperatures than transmon-based quantum batteries. A quantum battery based on QUBITs that work properly as two-level systems needs to operate at a temperature $T$ such that $k_B T < \hbar\omega_{i,ge}$, where $k_B \sim 1.38 \times 10^{-23}$ J/K is Boltzmann constant and $\omega_{i,ge}$ has been defined above. By working with QUBITs with larger values of $\hbar\omega_{i,ge}$, the operation temperature therefore increases.
-    They can be coupled to an electromagnetic QUBUS with much shorter wavelength, leading to ultra-compact quantum cells 3, much smaller than the coplanar microwave resonator discussed above in the context of metallic batteries.
-    They lead to quantum batteries 1 with increased energy density, as compared to the transmon-based QUBAs introduced above and therefore pave the way for a wealth of applications transcending quantum computing.

As far as typical quantum buses for semiconducting quantum batteries 1 are concerned, we note that semiconductor quantum dots have been coupled to the modes of a quantized electromagnetic field. For example, semiconducting quantum dots have already been successfully coupled to microwave resonators (see [34, 35, 37, 38]) and photonic crystals (see [39-42]). Finally, recent experimental progress in the field of two-dimensional electron systems hosted by semiconductor heterostructures (see [43-49]) may lead to the possibility of coupling a wide array of electrostatically-defined semiconducting quantum dots to THz planar microcavities.

**Semi-metallic quantum cells**

There are quantum batteries 1 where entanglement during the charging dynamics generates a collective advantage of certified quantum-mechanical origin (see [20]). The quantum battery model that was used in the numerical simulations reported in [20] was based on all-to-all inter-QUBIT interactions of the type proposed by Sachdev, Ye, and Kitaev (SYK) (see [50-53]) in the context of strongly correlated models and non-Fermi-liquid states of quantum matter. SYK-type interactions have not yet been demonstrated in a laboratory. There are several proposals though to engineer SYK interactions in a condensed matter setup (see [54]).

The SYK model describes a system of fermions in a zero-dimensional system, subject to random all-to-all four-fermion interactions. The authors of Ref. [55] have therefore proposed to realize the SYK model in a graphene quantum dot with irregular boundaries and subject to a strong applied magnetic field. Graphene quantum dots cannot be realized electrostatically but only by etching (because of the so-called Klein tunneling [56]). Disordered boundaries naturally occur in the nanofabrication procedure that leads to the quantum dot. The strong applied magnetic field limits, however, the actual potential of the set up proposed in Ref. [55] for any realistic technology. Another possibility would be to use a pseudo-magnetic field instead of a real one. This, however, remains to be studied theoretically. We emphasize that SYK QUBAs could be realized by creating e.g. a planar array of interconnected graphene quantum dots.-In this case, the electromagnetic quantum buses discussed above in the other implementations would not be needed since long-range electron-electron interactions alone would be responsible for inter-dot SYK-type interactions.

Other solid-state proposals to realize the SYK model have been made, but they are all based on so-called Majorana fermions [57,58]. Such elusive quasiparticles can be realized in solid-state platforms containing superconductors. In this patent we will not elaborate further on quantum batteries 1 based on Majorana fermions.

## Advantages

It is an advantage of the quantum battery according to the present invention that it can be charged in a very fast way, if compared with currently available batteries in the market. In particular, metallic batteries according to the present invention charge in a time scale on the order of a few nanoseconds.

Another advantage of the quantum battery according to the present invention is that it does not contain liquid parts and it is therefore a solid-state battery.

It is an additional advantage of the quantum battery according to the present invention the fact that they do not contain toxic elements. They can be built on the basis of a variety of non-toxic materials such as aluminum and graphene, or standard non-toxic semiconductors used in portable electronics such as silicon.

It is also an advantage of the quantum battery according to the present invention that it is compatible with quantum computing technologies.

It is an additional advantage of the quantum battery according to the present invention that it does not need any heating system.

The present invention has been described for illustrative but not limitative purposes, according to its preferred embodiments, but it is to be understood that modifications and/or changes can be introduced by those skilled in the art without departing from the relevant scope as defined in the enclosed claims.

## Bibliography

[1] C. A. Vincent and B. Scrosati, Modern Batteries (Butterworth-Heinemann, Oxford, 1997).

[2] B. Scrosati, History of lithium batteries, J. Solid State Electrochem. 15, 1623 (2011).

[3] D. Andre, S.-J. Kim, P. Lamp, S. Franz Lux, F. Maglia, O. Paschosa, and B. Stiaszny, Future generations of cathode materials: an automotive industry perspective, J. Mater. Chem. A 3,6709 (2015).

[4] See, for example, https://www.quantumscape.com/wp-content/uploads/2021/02/Data-Launch-Updated-Post-Presentation-20210107-2.pdf

[5] See, for example, D. P. Di Vincenzo, Quantum computation, Science 270, 255 (1995).

[6] See, for example, S. Vinjanampathy and J. Anders, Quantum thermodynamics, Contemporary Physics 57, 545 (2016).

[7] R. Alicki and M. Fannes, Entanglement boost for extractable work from ensembles of quantum batteries, Phys. Rev. E 87, 042123 (2013).

[8] For a recent review on quantum batteries see, for example, F. Campaioli, F. A. Pollock, and S. Vinjanampathy, in Thermodynamics in the Quantum Regime, F. Binder, L. A. Correa, C. Gogolin, J. Anders, and G. Adesso (eds.), p. 207-225, (Springer, 2018).

[9] K. V. Hovhannisyan, M. Perarnau-Llobet, M. Huber, and A. Acín, Entanglement generation is not necessary for optimal work extraction, Phys. Rev. Lett. 111, 240401 (2013).

[10] F. C. Binder, S. Vinjanampathy, K. Modi, and J. Goold, Quantacell: powerful charging of quantum batteries, New J. Phys. 17, 075015 (2015).

[11] F. Campaioli, F. A. Pollock, F. C. Binder, L. Céleri, J. Goold, S. Vinjanampathy, and K. Modi, Enhancing the charging power of quantum batteries, Phys. Rev. Lett. 118, 150601 (2017).

[12] D. Ferraro, M. Campisi, G. M. Andolina, V. Pellegrini, and M. Polini, High-power collective charging of a solid-state quantum battery, Phys. Rev. Lett. 120, 117702 (2018).

[13] G. M. Andolina, D. Farina, A. Mari, V. Pellegrini, V. Giovannetti, and M. Polini, Charger-mediated energy transfer in exactly solvable models for quantum batteries, Phys. Rev. B 98, 205423 (2018).

[14] G. M. Andolina, M. Keck, A. Mari, M. Campisi, V. Giovannetti, and M. Polini, Extractable work, the role of correlations, and asymptotic freedom in quantum batteries, Phys. Rev. Lett. 122, 047702 (2019).

[15] D. Farina, G. M. Andolina, A. Mari, M. Polini, and V. Giovannetti, Charger-mediated energy transfer for quantum batteries: An open-system approach, Phys. Rev. B 99, 035421 (2019).

[16] T. P. Le, J. Levinsen, K. Modi, M. M. Parish, and F. A. Pollock, Spin-chain model of a many-body quantum battery, Phys. Rev. A 97, 022106 (2018).

[17] D. Rossini, G. M. Andolina, and M. Polini, Many-body localized quantum batteries, Phys. Rev. B 100, 115142 (2019).

[18] S. Ghosh, T. Chanda, and A. Sen De, Enhancement in the performance of a quantum battery by ordered and disordered interactions, Phys. Rev. A 101, 032115 (2020).

[19] J. Q. Quach, K. E. McGhee, L. Ganzer, D. M. Rouse, B. W. Lovett, E. M. Gauger, J. Keeling, G. Cerullo, D. G. Lidzey, and T. Virgili, An organic quantum battery, arXiv:2012.06026.

[20] D. Rossini, G. M. Andolina, D. Rosa, M. Carrega, and M. Polini, Quantum advantage in the charging process of Sachdev-Ye-Kitaev batteries, Phys. Rev. Lett. 125, 236402 (2020).

[21] E. Strambini, A. Iorio, O. Durante, R. Citro, C. Sanz-Fernández, C. Guarcello, I.V. Tokatly, A. Braggio, M. Rocci, N. Ligato, V. Zannier, L. Sorba, F. Sebastián Bergeret, and F. Giazotto, A Josephson phase battery, Nature Nanotech. 15, 656 (2020).

[22] P. A. M. Dirac, Lectures on Quantum Mechanics (Dover, New York, 1964).

[23] A. Blais, R.-S. Huang, A. Wallraff, S. M. Girvin, and R. J. Schoelkopf, Cavity quantum electrodynamics for superconducting electrical circuits: An architecture for quantum computation, Phys. Rev. A 69, 062320 (2004).

[24] A. Blais, A. L. Grimsmo, S. M. Girvin, and A. Wallraff, Circuit quantum electrodynamics, Rev. Mod. Phys. 93, 025005 (2021).

[25] J. M. Fink, R. Bianchetti, M. Baur, M. Göppl, L. Steffen, S. Filipp, P. J. Leek, A. Blais, and A. Wallraff, Dressed collective qubit states and the Tavis-Cummings model in circuit QED, Phys. Rev. Lett. 103, 083601 (2009).

[26] P. Winkel, K. Borisov, L. Grünhaupt, D. Rieger, M. Spiecker, F. Valenti, A. V. Ustinov, W. Wernsdorfer, and I. M. Pop, Implementation of a transmon qubit using superconducting granular aluminum, Phys. Rev. X 10, 031032 (2020).

[27] L. Grünhaupt, M. Spiecker, D. Gusenkova, N. Maleeva, S. T. Skacel, I. Takmakov, F. Valenti, P. Winkel, H. Rotzinger, A. V. Ustinov, and I. M. Pop, Granular aluminium as a superconducting material for high-impedance quantum circuits, Nat. Materials 18, 816 (2019).

[28] M. Lyatti, M. A. Wolff, I. Gundareva, M. Kruth, S. Ferrari, R. E. Dunin-Borkowski, and C. Schuck, Energy-level quantization and single-photon control of phase slips in YBa2Cu3O7-x nanowires, Nat. Communications 11, 763 (2020).

[29] B. Müller, M. Karrer, F. Limberger, M. Becker, B. Schröppel, C. J. Burkhardt, R. Kleiner, E. Goldobin, and D. Koelle, Josephson Junctions and SQUIDs created by focused helium-ion-beam irradiation of YBa2Cu3O7, Phys. Rev. Applied 11, 044082 (2019).

[30] F. Priolo, T. Gregorkiewicz, M. Galli, and T. F. Krauss, Silicon nanostructures for photonics and photovoltaics, Nat. Nanotechnology 9, 19 (2014).

[31] S. Morozova, M. Alikina, A. Vinogradov, and M. Pagliaro, Silicon quantum dots: synthesis, encapsulation, and application in light-emitting diodes, Front. Chem. 8, 191 (2020).

[32] S. Terada, Y. Xin, and K.-i. Saitow, Cost-effective synthesis of silicon quantum dots, Chem. Mater. 32, 8382 (2020).

[33] L. Petit, H. G. J. Eenink, M. Russ, W. I. L. Lawrie, N. W. Hendrickx, S. G. J. Philips, J. S. Clarke, L. M. K. Vandersypen, and M. Veldhorst, Universal quantum logic in hot silicon qubits, Nature 580, 355 (2020).

[34] A. Stockklauser, P. Scarlino, J. V. Koski, S. Gasparinetti, C. K. Andersen, C. Reichl, W. Wegscheider, T. Ihn, K. Ensslin, and A. Wallraff, Strong coupling cavity QED with gate-defined double quantum dots enabled by a high impedance resonator, Phys. Rev. X 7, 011030 (2017).

[35] J. V. Koski, A. J. Landig, M. Russ, J. C. Abadillo-Uriel, P. Scarlino, B. Kratochwil, C. Reichl, W. Wegscheider, G. Burkard, M. Friesen, S. N. Coppersmith, A. Wallraff, K. Ensslin, and T. Ihn, Strong photon coupling to the quadrupole moment of an electron in a solid-state qubit, Nat. Physics 16, 642 (2020).

[36] L. De Trizio and L. Manna, Forging colloidal nanostructures via cation exchange reactions, Chem. Rev. 116, 10852 (2016).

[37] L. E Bruhat, T. Cubaynes, J. J. Viennot, M. C. Dartiailh, M. M. Desjardins, A. Cottet, and T. Kontos, Circuit QED with a quantum-dot charge qubit dressed by Cooper pairs, Phys. Rev. B 98, 155313 (2018).

[38] T. Cubaynes, M. R. Delbecq, M. C. Dartiailh, R. Assouly, M. M. Desjardins, L. C. Contamin, L. E. Bruhat, Z. Leghtas, F. Mallet, A. Cottet, and T. Kontos, Highly coherent spin states in carbon nanotubes coupled to cavity photons, npj Quantum Information 5, 47 (2019).

[39] Y. Ben, Z. Hao, C. Sun, F. Ren, N. Tan, and Y. Luo, Three-dimensional photonic-crystal cavity with an embedded quantum dot as a nonclassical light emitter, Opt. Express 12, 5146 (2004).

[40] I. Fushman, D. Englund, and J. Vučković, Coupling of PbS quantum dots to photonic crystal cavities at room temperature, Appl. Phys. Lett. 87, 241102 (2005).

[41] F. S. F. Brossard, X. L. Xu, D. A. Williams, M. Hadjipanayi, M. Hugues, M. Hopkinson, X. Wang, and R. A. Taylor, Strongly coupled single quantum dot in a photonic crystal waveguide cavity, Appl. Phys. Lett. 97, 111101 (2010).

[42] J. Vučković, Quantum optics and cavity QED with quantum dots in photonic crystals, in "Quantum Optics and Nanophotonics", edited by C. Fabre, V. Sandoghdar, N. Treps, and L. F. Cugliandolo (Oxford University Press, Oxford, 2017).

[43] G. Scalari, C. Maissen, D. Turčinková, D. Hagenmüller, S. De Liberato, C. Ciuti, C. Reichl, D. Schuh, W. Wegscheider, M. Beck, and J. Faist, Ultrastrong coupling of the cyclotron transition of a 2D electron gas to a THz metamaterial, Science 335, 1323 (2012).

[44] V. M. Muravev, P. A. Gusikhin, I. V. Andreev, and I. V. Kukushkin, Ultrastrong coupling of high-frequency two-dimensional cyclotron plasma mode with a cavity photon, Phys. Rev. B 8, 045307 (2013).

[45] S. Smolka, W. Wuester, F. Haupt, S. Faelt, W. Wegscheider, and A. Imamoglu, Cavity quantum electrodynamics with many-body states of a two-dimensional electron gas, Science 346, 332 (2014).

[46] Q. Zhang, M. Lou, X. Li, J. L. Reno, W. Pan, J. D. Watson, M. J. Manfra, and J. Kono, Collective non-perturbative coupling of 2D electrons with high-quality-factor terahertz cavity photons, Nat. Physics 12, 1005 (2016).

[47] S. Ravets, P. Knüppel, S. Faelt, M. Kroner, W. Wegscheider, and A. Imamoglu, Polaron Ppolaritons in the integer and fractional quantum Hall regimes, Phys. Rev. Lett. 120, 057401 (2018).

[48] G. L. Paravicini-Bagliani, F. Appugliese, E. Richter, F. Valmorra, J. Keller, M. Beck, N. Bartolo, C. Rössler, T. Ihn, K. Ensslin, C. Ciuti, G. Scalari, and J. Faist, Magneto-transport controlled by Landau polariton states, Nat. Physics 15, 186 (2019).

[49] P. Knüppel, S. Ravets, M. Kroner, S. Fält, W. Wegscheider, and A. Imamoglu, Nonlinear optics in the fractional quantum Hall regime, Nature 572, 91 (2019).

[50] S. Sachdev and J. Ye, Gapless spin-fluid ground state in a random quantum Heisenberg magnet, Phys. Rev. Lett. 70, 3339 (1993).

[51] A. Y. Kitaev, Talks at KITP, University of California, Santa Barbara (USA), Entanglement in Strongly Correlated Quantum Matter (2015).

[52] Y. Gu, A. Kitaev, S. Sachdev, and G. Tarnopolsky, Notes on the complex Sachdev-Ye-Kitaev model, J. High Energ. Phys. 2020, 157 (2020).

[53] For a recent review see e.g. V. Rosenhaus, An introduction to the SYK model, J. Phys. A: Math. Theor. 52, 323001 (2019).

[54] For a recent review see e.g. M. Franz and M. Rozali, Mimicking black hole event horizons in atomic and solid-state systems, Nat. Reviews Materials 3, 491 (2018).

[55] A. Chen, R. Ilan, F. de Juan, D. I. Pikulin, and M. Franz, Quantum holography in graphene flake with an irregular boundary, Phys. Rev. Lett. 121, 036403 (2018).

[56] M. I. Katsnelson, K. S. Novoselov, and A. K. Geim, Chiral tunnelling and the Klein paradox in graphene, Nat. Physics 2, 620 (2006).

[57] A. Chew, A. Essin, and J. Alicea, Approximating the Sachdev-Ye-Kitaev model with Majorana wires, Phys. Rev. B 96, 121119(R) (2017).

[58] D. I. Pikulin and M. Franz, Black hole on a chip: Proposal for a physical realization of the Sachdev-Ye-Kitaev model in a solid-state system, Phys. Rev. X 7, 031006 (2017).

[59] L. M. K. Vandersypen and I. L. Chuang, NMR techniques for quantum control and computation, Rev. Mod. Phys. 76, 1037 (2005).

[60] J. I. Cirac and P. Zoller, Quantum Computations with Cold Trapped Ions, Phys. Rev. Lett. 74, 4091 (1995).

[61] T. Monz, P. Schindler, J. T. Barreiro, M. Chwalla, D. Nigg, W. A. Coish, M. Harlander, W. Hänsel, M. Hennrich, and R. Blatt, 14-Qubit Entanglement: Creation and Coherence, Phys. Rev. Lett. 106, 130506 (2011).

[62] L. Childress, M. G. Dutt, J. Taylor, A. Zibrov, F. Jelezko, J. Wrachtrup, P. Hemmer, and M. Lukin, Coherent dynamics of coupled electron and nuclear spin qubits in diamond, Science 314, 281 (2006).

[63] J. Kelly et al., State preservation by repetitive error detec- tion in a superconducting quantum circuit, Nature 519, 66 (2015).

[64] Y. Nakamura, Y. A. Pashkin, and J. Tsai, Coherent control of macroscopic quantum states in a single-Cooper-pair box, Nature 398, 786 (1999).

[65] Y. Makhlin, G. Schön, and A. Shnirman, Quantum-state engineering with Josephson-junction devices, Rev. Mod. Phys. 73, 357 (2001).

[66] R. Hanson, L. P. Kouwenhoven, J. R. Petta, S. Tarucha, and L. M. K. Vandersypen, Spins in few-electron quantum dots, Rev. Mod. Phys. 79, 1217 (2007).

[67] F. A. Zwanenburg, A. S. Dzurak, A. Morello, M. Y. Sim- mons, L. C. Hollenberg, G. Klimeck, S. Rogge, S. N. Coppersmith, and M. A. Eriksson, Silicon quantum electronics, Rev. Mod. Phys. 85, 961 (2013).

[68] A. Wallraff et al. Nature 431, 162-167 (2004)

[69] J. M. Chow, A. D. Crcoles, J. M. Gambetta, C. Rigetti, B. R. Johnson, J. A. Smolin, J. R. Rozen, G. A. Keefe, M. B. Rothwell, M. B. Ketchen, and et al., Physical Review Letters 107 (2011), 10.1103/phys- revlett.107.080502.

[71] D. C. McKay, S. Filipp, A. Mezzacapo, E. Magesan, J. M. Chow, and J. M. Gambetta, Physical Review Applied 6 (2016), 10.1103/physrevapplied.6.064007.

[72] M. Ganzhorn, D. Egger, P. Barkoutsos, P. Ollitrault, G. Salis, N. Moll, M. Roth, A. Fuhrer, P. Mueller, S. Wo- erner, and et al., Physical Review Applied 11 (2019), 10.1103/physrevapplied.11.044092.

[73] M. Reagor, C. B. Osborn, N. Tezak, A. Staley, G. Prawiroatmodjo, M. Scheer, N. Alidoust, E. A. Sete, N. Didier, M. P. da Silva, and et al., Science Advances 4, eaao3603 (2018).

[74] L. DiCarlo, J. M. Chow, J. M. Gambetta, L. S. Bishop, B. R. Johnson, D. I. Schuster, J. Majer, A. Blais, L. Frun- zio, S. M. Girvin, and et al., Nature 460, 240244 (2009).

[75] R. Barends, J. Kelly, A. Megrant, A. Veitia, D. Sank, E. Jeffrey, T. C. White, J. Mutus, A. G. Fowler, B. Campbell, and et al., Nature 508, 500503 (2014).

[76] M. Rol, F. Battistel, F. Malinowski, C. Bultink, B. Tarasinski, R. Vollmer, N. Haider, N. Muthusubrama- nian, A. Bruno, B. Terhal, and et al., Physical Review Letters 123 (2019), 10.1103/physrevlett.123.120502.

[77] F. Arute, K. Arya, R. Babbush, D. Bacon, J. C. Bardin, R. Barends, R. Biswas, S. Boixo, F. G. S. L. Brandao, D. A. Buell, and et al., Nature 574, 505510 (2019).

[78] Fang, T., Gao, X., Wang, X. and Liu, J., 2021. Design of gate-tunable graphene electro-optical reflectors based on an optical slot-antenna coupled cavity. Journal of Physics: Photonics, 3(4), p.045003.

[79] Kaplan, A.E., Bassi, P. and Bellanca, G., 2020. Tunable narrow band optical reflector based on indirectly coupled micro ring resonators. Optics Express, 28(9), pp.13497-13515.

**Claims**

1. A quantum battery (1) for storing and supplying energy, comprising one or more clusters (2) for storing energy, each one comprising at least one quantum cell (3),

   wherein each quantum cell (3) has one or more quantum energy units (31),
   wherein each quantum energy unit (31) is a quantum system having a plurality of energy levels ($|\varepsilon_0\rangle_{A_j,k}$, $|\varepsilon_1\rangle_{A_j,k}$, ..., $|\varepsilon_{d-1}\rangle_{A_j,k}$) to store energy,
   wherein said quantum battery (1) is **characterized**

   **in that** each one of said quantum cells (3) comprises
   a plurality of quantum energy units (31), and
   an inner quantum bus (32), operable for causing mutual interactions between said quantum energy units (31) inside each quantum cell (3),
   wherein said inner quantum bus (32) is a quantum mechanical system, and
   wherein each quantum energy unit (31) couples with said inner quantum bus (32) of the corresponding quantum cell (3), under resonant conditions, and
   **in that** each quantum cell (3) comprises a first control line (51), which is adjustable by an external control, for adjusting the charging process of each quantum cell (3).

2. The quantum battery (1) according to the preceding claim, **characterized**
   **in that** said quantum energy unit (31) is a QUBIT as two-energy level quantum system, or a QUTRITs as three-energy level quantum system, or a QUDIT as a quantum system with a discrete number of energy levels.

3. The quantum battery (1) according to claim 1, **characterized in that** said inner quantum bus (32) has a discrete energy spectrum comprising a finite collection of frequencies ($\{\omega_B\}$), wherein said finite collection of frequencies ($\{\omega_B\}$) can be modified by said first control lines (51);
   wherein preferably

   the resonant condition occurs when said first control line (51) allows that one of frequencies ($\{\omega_B\}$) of the discrete energy spectrum of said inner quantum bus (32) is in resonance with one of the level-spacings of the energy spectrum of one of the quantum energy units (31), so as to allow for an energy exchange among the inner quantum bus (32) and the corresponding quantum energy units (31) within a relevant quantum cell (3), and
   the energy flow from said quantum battery (1) is inhibited by setting the frequencies ($\{\omega_B\}$) off-resonant with respect to the energy spectrum of the quantum energy units (31).

4. The quantum battery (1) according to any one of the preceding claims, **characterized in that** it comprises

   a plurality of clusters (2), and
   one or more outer quantum bus (4),
   wherein each outer quantum bus (4) is connected to at least one of said clusters (2), to couple the quantum cells (31) of said clusters (2),
   wherein each outer quantum bus (4) is connectable to at least one external power sources, for charging the quantum energy units (31), and/or to at least one load, to be supplied by the energy stored in said quantum energy units (31), and
   wherein said outer quantum bus (4) is operable to charge and discharge the quantum energy units (31) of the quantum cells (3) contained in said clusters (2);

wherein preferably each outer quantum bus (4) is connectable to said at least one external power sources and/or to said at least one load through electrodes;

wherein further preferably said outer quantum bus (4) has a continuous energy spectrum.

5. The quantum battery (1) according to claim 4, **characterized**

   **in that** said outer quantum bus (4) is a waveguide, wherein the propagating electromagnetic modes of the waveguide connects said quantum ells (3); and/or

   **in that** it comprises a second control line (52) to control said outer quantum bus (4), implemented with voltage/magnetic pulses, for tuning the interactions between said outer quantum bus (4) said the inner quantum bus (32).

6. The quantum battery (1) according to any one of the preceding claims, **characterized**

   **in that** said quantum energy unit (31) is a quantum dot, and

   **in that** said quantum cell (3) is an electromagnetic cavity.

7. The quantum battery (1) according to the preceding claim, **characterized**

   **in that** said electromagnetic cavity is a Fabry-Pérot resonator,

   **in that** the inner quantum bus (32) is operated by the modes of the quantized cavity electromagnetic field, and

   **in that** the outer quantum bus (4) is operated by the electromagnetic modes propagating in wave guides, which connect together the quantum cells (3).

8. The quantum battery (1) according to any one of the preceding claims, **characterized**

   **in that** each cluster (2) comprises a plurality of quantum cells (3), and

   **in that** each cell (3) comprises a plurality of quantum energy units (31).

9. The quantum battery (1) according to the preceding claim, **characterized in that** said clusters (2) are arranged in a network selected among the following:

   a linear network;

   a snake-like network; or

   in a three-dimensional network, as a stack of two-dimensional interconnected quantum cells (3).

10. The quantum battery (1) according to any one of claims 8 or 9, **characterized in that** said cluster (2) has a planar square geometry.

11. The quantum battery (1) according to any one of the preceding claims, **characterized**

   **in that** each of said quantum energy units (31) is a fully tunable artificial metallic macro-atoms, each one having a ground state ($|g\rangle$) and at least excited state ($|e\rangle$),

   **in that** each one of said quantum cell (3) is built by a discrete set of fully tunable artificial metallic macro-atoms, and

   **in that** said inner quantum bus (32) comprises an electromagnetic cavity or resonator, where each of said quantum cells (3) is contained, wherein a quantized microwave radiation field is contained in said electromagnetic cavity or resonator.

12. The quantum battery (1) according to the preceding claim, **characterized in that** said quantum energy unit (31) is a transmon-type superconducting QUBITs embedded in a coplanar waveguide resonator,

   wherein the transmon is preferably made of aluminum and/or Yttrium barium copper oxide-YBCO.

13. The quantum battery (1) according to claim 11, **characterized in that** said artificial atoms are made of semiconducting materials,

   wherein said semiconducting materials are selected among the following:

- silicon quantum dots;
- gallium arsenide quantum dots;
- cadmium selenide (CdSe) quantum dots; and
- carbon nanotube quantum dots,

wherein preferably said semiconducting quantum dots host both charge and spin.

14. A method for charging and discharging a quantum battery (1), wherein said quantum battery (1) comprises:

one or more clusters (2), each one comprising at least one quantum cell (3), wherein each quantum cell (3) has one or more quantum energy units (31) having a plurality of energy levels ($|\varepsilon_0\rangle_{A_{j,k}}$, $|\varepsilon_1\rangle_{A_{j,k}}$, ..., $|\varepsilon_{d-1}\rangle_{A_{j,k}}$) to store energy;
a first control line (51); and
an inner quantum bus (32), which couples with said inner quantum bus (32) of the corresponding quantum cell (3), under resonant conditions said inner quantum bus (32), wherein said inner quantum bus (32) has a discrete energy spectrum comprising a finite collection of frequencies ($\{\omega_B\}$), wherein said finite collection of frequencies ($\{\omega_B\}$) can be modified by said first control lines (51);
wherein the battery charging comprises the steps of applying a resonant excitation between the inner quantum bus and the quantum energy units (31) of the quantum cells (3) by said first control line (51) such that one of frequencies ($\{\omega_B\}$) of the discrete energy spectrum of an inner quantum bus (32) is in resonance with one of the level-spacings of the energy spectrum of an individual quantum energy units (31), to allow an energy exchange.

15. The method according to the preceding claim, **characterized in that**

it comprises the step of using said second control line (52) to connect at least two clusters (2) of quantum energy units (31) via an outer quantum bus (4), to allow for energy exchange between the said clusters (2),
wherein said at least one an outer quantum bus (4) is connectable to at least one external power sources, for charging the quantum energy units (31), and/or to at least one load, to be supplied by the energy stored in said quantum energy units (31); and/or
it comprises the step of setting the frequencies ($\{\omega_B\}$) off-resonant with respect to the energy spectrum of the quantum energy units (31), so as to inhibit the energy flow.

## Patentansprüche

1. Quantenbatterie (1) zum Speichern von und Versorgen mit Energie, umfassend einen oder mehrere Cluster (2) zum Speichern von Energie, jedes umfassend mindestens eine Quantenzelle (3),

wobei jede Quantenzelle (3) eine oder mehrere Quantenenergieeinheiten (31) aufweist,
wobei jede Quantenenergieeinheit (31) ein Quantensystem ist, das eine Vielzahl von Energieniveaus ($|\varepsilon_0\rangle_{A_{j,k}}$, $|\varepsilon_1\rangle_{A_{j,k}}$, ..., $|\varepsilon_{d-1}\rangle_{A_{j,k}}$) zum Speichern von Energie aufweist,
wobei die Quantenbatterie (1) **dadurch gekennzeichnet ist, dass**
jede der Quantenzellen (3) Folgendes umfasst

eine Vielzahl von Quantenenergieeinheiten (31), und
einen inneren Quantenbus (32), der zum Bewirken gegenseitiger Wechselwirkungen zwischen den Quantenenergieeinheiten (31) im Inneren jeder Quantenzelle (3) betreibbar ist,
wobei der innere Quantenbus (32) ein quantenmechanisches System ist, und
wobei, unter Resonanzbedingungen, jede Quantenenergieeinheit (31) mit dem inneren Quantenbus (32) der entsprechenden Quantenzelle (3) gekoppelt ist, und
dass jede Quantenzelle (3) eine erste Steuerleitung (51) umfasst, die durch eine externe Steuerung einstellbar ist, um den Ladeprozess jeder Quantenzelle (3) einzustellen.

2. Quantenbatterie (1) nach dem vorstehenden Anspruch, **dadurch gekennzeichnet, dass**
die Quantenenergieeinheit (31) ein QUBIT als Quantensystem mit zwei Energieniveaus, oder ein QUTRITs als Quantensystem mit drei Energieniveaus, oder ein QUDIT als Quantensystem mit einer diskreten Anzahl von Energieniveaus ist.

3.	Quantenbatterie (1) nach Anspruch 1, **dadurch gekennzeichnet, dass** der innere Quantenbus (32) ein diskretes Energiespektrum aufweist, das eine endliche Sammlung von Frequenzen ($\{\omega_B\}$) umfasst, wobei die endliche Sammlung von Frequenzen ($\{\omega_B\}$) durch die ersten Steuerleitungen (51) modifiziert werden kann;

wobei vorzugsweise
die Resonanzbedingung auftritt, wenn die erste Steuerleitung (51) es ermöglicht, dass eine der Frequenzen ($\{\omega_B\}$) des diskreten Energiespektrums des inneren Quantenbusses (32) mit einem der Niveau-Abstände des Energiespektrums einer der Quantenenergieeinheiten (31) in Resonanz ist, um einen Energieaustausch zwischen dem inneren Quantenbus (32) und den entsprechenden Quantenenergieeinheiten (31) innerhalb einer relevanten Quantenzelle (3) zu ermöglichen, und
der Energiefluss aus der Quantenbatterie (1) durch Festlegen der Frequenzen ($\{\omega_B\}$) außerhalb der Resonanz in Bezug auf das Energiespektrum der Quantenenergieeinheiten (31) unterdrückt wird.

4.	Quantenbatterie (1) nach einem der vorstehenden Ansprüche, **dadurch gekennzeichnet ist, dass** sie

eine Vielzahl von Clustern (2), und
einen oder mehrere äußere Quantenbusse (4) umfasst,
wobei jeder äußere Quantenbus (4) mit mindestens einem der Cluster (2) verbunden ist, um die Quantenzellen (31) der Cluster (2) zu koppeln,
wobei jeder äußere Quantenbus (4) mit mindestens einer externen Leistungsquelle zum Laden der Quantenenergieeinheiten (31) und/oder mit mindestens einer Last, die mit der in den Quantenenergieeinheiten (31) gespeicherten Energie versorgt werden soll, verbindbar ist, und
wobei der äußere Quantenbus (4) zum Laden und Entladen der Quantenenergieeinheiten (31) der in den Clustern (2) enthaltenen Quantenzellen (3) betreibbar ist;
wobei vorzugsweise jeder äußere Quantenbus (4) durch Elektroden mit der mindestens einen externen Leistungsquelle und/oder mit der mindestens einen Last verbindbar ist;
weiter vorzugsweise, wobei der äußere Quantenbus (4) ein kontinuierliches Energiespektrum aufweist.

5.	Quantenbatterie (1) nach Anspruch 4, **dadurch gekennzeichnet**

**dass** der äußere Quantenbus (4) ein Wellenleiter ist, wobei die sich ausbreitenden elektromagnetischen Modi des Wellenleiters die Quantenzellen (3) verbinden; und/oder
**dass** sie eine zweite Steuerleitung (52) umfasst, um den äußeren Quantenbus (4) zu steuern, implementiert mit Spannungs-/Magnetimpulsen, um die Wechselwirkungen zwischen dem äußeren Quantenbus (4) und dem inneren Quantenbus (32) abzustimmen.

6.	Quantenbatterie (1) nach einem der vorstehenden Ansprüche, **dadurch gekennzeichnet**

**dass** die Quantenenergieeinheit (31) ein Quantenpunkt ist, und
**dass** die Quantenzelle (3) ein elektromagnetischer Hohlraum ist.

7.	Quantenbatterie (1) nach dem vorstehenden Anspruch, **dadurch gekennzeichnet**

**dass** der elektromagnetische Hohlraum ein Fabry-Pérot-Resonator ist,
**dass** der innere Quantenbus (32) durch die Modi des quantisierten elektromagnetischen Feldes des Hohlraums betrieben wird, und
**dass** der äußere Quantenbus (4) durch die elektromagnetischen Modi betrieben wird, die sich in Wellenleitern ausbreiten, welche die Quantenzellen (3) miteinander verbinden.

8.	Quantenbatterie (1) nach einem der vorstehenden Ansprüche, **dadurch gekennzeichnet**

**dass** jeder Cluster (2) eine Vielzahl von Quantenzellen (3) umfasst, und
**dass** jede Zelle (3) eine Vielzahl von Quantenenergieeinheiten (31) umfasst.

9.	Quantenbatterie (1) nach dem vorstehenden Anspruch, **dadurch gekennzeichnet, dass** die Cluster (2) in einem Netzwerk angeordnet sind, das unter den Folgenden ausgewählt ist:

einem linearen Netzwerk;

einem schlangenförmigen Netzwerk; oder

einem dreidimensionalen Netzwerk, wie einem Stapel von zweidimensionalen, miteinander verbundenen Quantenzellen (3).

10. Quantenbatterie (1) nach einem der Ansprüche 8 oder 9, **dadurch gekennzeichnet, dass** der Cluster (2) eine planare quadratische Geometrie aufweist.

11. Quantenbatterie (1) nach einem der vorstehenden Ansprüche, **dadurch gekennzeichnet**

**dass** jede der Quantenenergieeinheiten (31) ein vollständig abstimmbares künstliches metallisches Makro-Atom ist, wobei jedes einen Grundzustand ($|g\rangle$) und mindestens einen angeregten Zustand ($|e\rangle$) aufweist,

**dass** jede der Quantenzellen (3) aus einem diskreten Satz von vollständig abstimmbaren künstlichen metallischen Makro-Atomen aufgebaut ist, und

**dass** der innere Quantenbus (32) einen elektromagnetischen Hohlraum oder Resonator umfasst, in dem jede der Quantenzellen (3) enthalten ist, wobei ein quantisiertes Mikrowellenstrahlungsfeld in dem elektromagnetischen Hohlraum oder Resonator enthalten ist.

12. Quantenbatterie (1) nach dem vorstehenden Anspruch, **dadurch gekennzeichnet, dass** die Quantenenergieeinheit (31) eine supraleitende QUBITs vom Transmon-Typ ist, die in einen koplanaren Wellenleiterresonator eingebettet ist, wobei das Transmon vorzugsweise aus Aluminium und/oder Yttrium-Barium-Kupferoxid-YBCO gefertigt ist.

13. Quantenbatterie (1) nach Anspruch 11, **dadurch gekennzeichnet, dass** die künstlichen Atome aus halbleitenden Materialien gefertigt sind,

wobei die halbleitenden Materialien unter den folgenden ausgewählt sind:

- Silizium-Quantenpunkten;
- Galliumarsenid-Quantenpunkten;
- Cadmiumselenid (CdSe)-Quantenpunkten; und
- Kohlenstoff-Nanoröhrchen-Quantenpunkten,

wobei die halbleitenden Quantenpunkte vorzugsweise sowohl Ladung als auch Spin hosten.

14. Verfahren zum Laden und Entladen einer Quantenbatterie (1), wobei die Quantenbatterie (1) umfasst:

einen oder mehrere Cluster (2), jeder umfassend mindestens eine Quantenzelle (3), wobei jede Quantenzelle (3) eine oder mehrere Quantenenergieeinheiten (31) aufweist, die eine Vielzahl von Energieniveaus ($|\varepsilon_0\rangle_{A_{j,k}}$, $|\varepsilon_1\rangle_{A_{j,k}}$, ..., $|\varepsilon_{d-1}\rangle_{A_{j,k}}$) zum Speichern von Energie aufweisen;

eine erste Steuerleitung (51); und

einen inneren Quantenbus (32), wobei der innere Quantenbus (32) sich unter Resonanzbedingungen mit dem inneren Quantenbus (32) der entsprechenden Quantenzelle (3) koppelt, wobei der innere Quantenbus (32) ein diskretes Energiespektrum aufweist, das eine endliche Sammlung von Frequenzen ($\{\omega_B\}$) umfasst, wobei die endliche Sammlung von Frequenzen ($\{\omega_B\}$) durch die ersten Steuerleitungen (51) modifiziert werden kann;

wobei das Batterieladen die Schritte umfasst von einem Anwenden einer Resonanzanregung zwischen dem inneren Quantenbus und den Quantenenergieeinheiten (31) der Quantenzellen (3) durch die erste Steuerleitung (51), sodass eine der Frequenzen ($\{\omega_B\}$) des diskreten Energiespektrums eines inneren Quantenbusses (32) in Resonanz mit einem der Niveauabstände des Energiespektrums einer einzelnen Quantenenergieeinheit (31) ist, um einen Energieaustausch zu ermöglichen.

15. Verfahren nach dem vorstehenden Anspruch, **dadurch gekennzeichnet, dass**

es den Schritt umfasst von einem Verwenden der zweiten Steuerleitung (52), um mindestens zwei Cluster (2) von Quantenenergieeinheiten (31) über einen äußeren Quantenbus (4) zu verbinden, um einen Energieaustausch zwischen den Clustern (2) zu ermöglichen,

wobei der mindestens eine äußere Quantenbus (4) mit mindestens einer externen Energiequelle zum Laden der Quantenenergieeinheiten (31) und/oder mit mindestens einer Last, die mit der in den Quantenenergieeinheiten (31) gespeicherten Energie versorgt werden soll, verbindbar ist; und/oder

es den Schritt umfasst von einem Festlegen der Frequenzen ($\{\omega_B\}$) außerhalb der Resonanz in Bezug auf das Energiespektrum der Quantenenergieeinheiten (31), um den Energiefluss zu unterdrücken.

**Revendications**

1. Batterie quantique (1) destinée à stocker et à apporter de l'énergie, comprenant un ou plusieurs groupes (2) destinés à stocker de l'énergie, chacun comprenant au moins une cellule quantique (3),

   dans laquelle chaque cellule quantique (3) présente une ou plusieurs unités d'énergie quantique (31), dans laquelle chaque unité d'énergie quantique (31) est un système quantique présentant une pluralité de niveaux d'énergie ($|\varepsilon_0\rangle_{A_j,k}$, $|\varepsilon_1\rangle_{A_j,k}$, ..., $|\varepsilon_{d-1}\rangle_{A_j,k}$) pour stocker l'énergie, dans laquelle ladite batterie quantique (1) est **caractérisée**

   **en ce que** chacune desdites cellules quantiques (3) comprend une pluralité d'unités d'énergie quantique (31), et un bus quantique interne (32), servant à provoquer des interactions mutuelles entre lesdites unités d'énergie quantique (31) à l'intérieur de chaque cellule quantique (3), dans laquelle ledit bus quantique interne (32) est un système mécanique quantique, et dans laquelle chaque unité d'énergie quantique (31) se couple audit bus quantique interne (32) de la cellule quantique (3) correspondante, dans des conditions de résonance, et **en ce que** chaque cellule quantique (3) comprend une première ligne de commande (51), qui peut être ajustée par une commande externe, pour ajuster le processus de charge de chaque cellule quantique (3).

2. Batterie quantique (1) selon la revendication précédente, **caractérisée en ce que** ladite unité d'énergie quantique (31) est un qubit en tant que système quantique à deux niveaux d'énergie, ou un qutrit en tant que système quantique à trois niveaux d'énergie, ou un qudit en tant que système quantique avec un nombre distinct de niveaux d'énergie.

3. Batterie quantique (1) selon la revendication 1, **caractérisée en ce que** ledit bus quantique interne (32) présente un spectre d'énergie distinct comprenant une collection limitée de fréquences ($\{\omega_B\}$), dans laquelle ladite collection limitée de fréquences ($\{\omega_B\}$) peut être modifiée par lesdites premières lignes de commande (51) ; dans lequel préférablement

   la condition de résonance survient lorsque ladite première ligne de commande (51) permet que l'une des fréquences ($\{\omega_B\}$) du spectre d'énergie distinct dudit bus quantique interne (32) est en résonance avec l'un des espacements de niveau du spectre d'énergie de l'une des unités d'énergie quantique (31), de manière à permettre un échange d'énergie entre le bus quantique interne (32) et les unités d'énergie quantique (31) correspondantes dans une cellule quantique (3) concernée, et le flux d'énergie provenant de ladite batterie quantique (1) est empêché en réglant les fréquences ($\{\omega_B\}$) hors-résonance par rapport au spectre d'énergie des unités d'énergie quantique (31).

4. Batterie quantique (1) selon l'une quelconque des revendications précédentes, **caractérisée en ce qu'**elle comprend

   une pluralité de groupes (2), et un ou plusieurs bus quantiques externes (4), dans laquelle chaque bus quantique externe (4) est connecté à au moins l'un desdits groupes (2), pour coupler les cellules quantiques (31) desdits groupes (2), dans laquelle chaque bus quantique externe (4) peut être connecté à au moins une source d'alimentation externe, destinée à charger les unités d'énergie quantique (31), et/ou à au moins une charge, destinée à être alimentée par l'énergie stockée dans lesdites unités d'énergie quantique (31), et dans laquelle ledit bus quantique externe (4) sert à charger et à décharger les unités d'énergie quantique (31) des cellules quantiques (3) contenues dans lesdits groupes (2) ; dans laquelle, de préférence, chaque bus quantique externe (4) peut être connecté auxdites au moins une source d'alimentation externes et/ou à ladite au moins une charge par le biais d'électrodes ; dans laquelle, en outre de préférence, ledit bus quantique externe (4) présente un spectre d'énergie continue.

5. Batterie quantique (1) selon la revendication 4, **caractérisée**

EP 4 436 911 B1

**en ce que** ledit bus quantique externe (4) est un guide d'ondes, dans laquelle la propagation de modes électromagnétiques du guide d'ondes connecte lesdites cellules quantiques (3) ; et/ou

**en ce qu'**il comprend une seconde ligne de commande (52) pour commander ledit bus quantique externe (4), mise en œuvre avec des impulsions de tension/magnétiques, pour accorder les interactions entre ledit bus quantique externe (4) et ledit bus quantique interne (32).

6. Batterie quantique (1) selon l'une quelconque des revendications précédentes, **caractérisée**

    **en ce que** ladite unité d'énergie quantique (31) est un point quantique, et
    **en ce que** ladite cellule quantique (3) est une cavité électromagnétique.

7. Batterie quantique (1) selon la revendication précédente, **caractérisée**

    **en ce que** ladite cavité électromagnétique est un résonateur de Fabry-Pérot,
    **en ce que** le bus quantique interne (32) est actionné par les modes du champ électromagnétique à cavité quantifié, et
    et **en ce que** le bus quantique externe (4) est actionné par les modes électromagnétiques se propageant dans des guides d'ondes, qui connectent ensemble les cellules quantiques (3).

8. Batterie quantique (1) selon l'une quelconque des revendications précédentes, **caractérisée**

    **en ce que** chaque groupe (2) comprend une pluralité de cellules quantiques (3), et
    **en ce que** chaque cellule (3) comprend une pluralité d'unités d'énergie quantique (31).

9. Batterie quantique (1) selon la revendication précédente, **caractérisée en ce que** lesdits groupes (2) sont agencés en un réseau sélectionné parmi les suivants :

    un réseau linéaire ;
    un réseau en forme de serpent ; ou
    en un réseau tridimensionnel, tel qu'une pile de cellules quantiques (3) interconnectées en deux dimensions.

10. Batterie quantique (1) selon l'une quelconque des revendications 8 ou 9, **caractérisée en ce que** ledit groupe (2) présente une géométrie carrée planaire.

11. Batterie quantique (1) selon l'une quelconque des revendications précédentes, **caractérisée**

    **en ce que** chacune desdites unités d'énergie quantique (31) est un macro-atome métallique artificiel entièrement accordable, chacun présentant un état terre ($|g\rangle$) et au moins un état excité ($|e\rangle$),
    **en ce que** chaque dite cellule quantique (3) est construite par un ensemble distinct de macro-atomes métalliques artificiels entièrement accordables, et
    **en ce que** ledit bus quantique interne (32) comprend un résonateur ou une cavité électromagnétique, où chacune desdites cellules quantiques (3) est contenue, dans laquelle un champ de rayonnement à micro-ondes quantifié est contenu dans ledit résonateur ou ladite cavité électromagnétique.

12. Batterie quantique (1) selon la revendication précédente, **caractérisée en ce que** ladite unité d'énergie quantique (31) est un qubit supraconducteur de type transmon incorporés dans un résonateur à guide d'ondes coplanaire, dans laquelle le transmon est préférablement composé d'aluminium et/ou d'oxyde d'yttrium-baryum-cuivre-YBCO.

13. Batterie quantique (1) selon la revendication 11, **caractérisée en ce que** lesdits atomes artificiels sont composés de matériaux semi-conducteurs,

    dans laquelle lesdits matériaux semi-conducteurs sont sélectionnés parmi les suivants :

        - points quantiques de silicium ;
        - points quantiques d'arséniure de gallium ;
        - points quantiques de séléniure de cadmium (CdSe) ; et
        - points quantiques de nanotubes de carbone,

dans laquelle préférablement lesdits points quantiques semi-conducteurs hébergent à la fois charge et spin.

14. Procédé de charge et de décharge d'une batterie quantique (1), dans lequel ladite batterie quantique (1) comprend :

un ou plusieurs groupes (2), chacun comprenant au moins une cellule quantique (3), dans lequel chaque cellule quantique (3) présente une ou plusieurs unités d'énergie quantique (31) présentant une pluralité de niveaux d'énergie ($|\varepsilon_0\rangle_{A_{j,k}}$, $|\varepsilon_1\rangle_{A_{j,k}}$, ..., $|\varepsilon_{d-1}\rangle_{A_{j,k}}$) pour stocker l'énergie ;
une première ligne de commande (51) ; et
un bus quantique interne (32), qui se couple audit bus quantique interne (32) de la cellule quantique (3) correspondante, dans des conditions de résonance dudit bus quantique interne (32), dans lequel ledit bus quantique interne (32) présente un spectre d'énergie distinct comprenant une collection limitée de fréquences ($\{\omega_B\}$), dans lequel ladite collection limitée de fréquences ($\{\omega_B\}$) peut être modifiée par lesdites premières lignes de commande (51) ;
dans lequel la charge de batterie comprend les étapes d'application d'une excitation de résonance entre le bus quantique interne et les unités d'énergie quantique (31) des cellules quantiques (3) par ladite première ligne de commande (51) de telle sorte que l'une des fréquences ($\{\omega_B\}$) du spectre d'énergie distinct d'un bus quantique interne (32) est en résonance avec l'un des espacements de niveau du spectre d'énergie d'une unité d'énergie quantique (31) individuelle, de manière à permettre un échange d'énergie.

15. Procédé selon la revendication précédente, **caractérisé en ce que**

il comprend l'étape d'utilisation de ladite seconde ligne de commande (52) pour connecter au moins deux groupes (2) d'unités d'énergie quantique (31) via un bus quantique externe (4), pour permettre un échange d'énergie entre lesdits groupes (2),
dans lequel ledit au moins un bus quantique externe (4) peut être connecté à au moins une source d'alimentation externe, destinée à charger les unités d'énergie quantique (31), et/ou à au moins une charge, destinée à être alimentée par l'énergie stockée dans lesdites unités d'énergie quantique (31) ; et/ou
il comprend l'étape de réglage des fréquences ($\{\omega_B\}$) hors-résonance par rapport au spectre d'énergie des unités d'énergie quantique (31), de manière à empêcher le flux d'énergie.

Fig. 1

Fig. 2

Fig. 3

Fig. 4

Fig. 5

Fig. 6

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **C. A. VINCENT** ; **B. SCROSATI**. Modern Batteries. Butterworth-Heinemann, 1997
- **B. SCROSATI**. History of lithium batteries. *J. Solid State Electrochem.*, 2011, vol. 15, 1623
- **D. ANDRE** ; **S.-J. KIM** ; **P. LAMP** ; **S. FRANZ LUX** ; **F. MAGLIA** ; **O. PASCHOSA** ; **B. STIASZNY**. Future generations of cathode materials: an automotive industry perspective. *J. Mater. Chem. A*, 2015, vol. 3, 6709
- **D. P. DI VINCENZO**. Quantum computation. *Science*, 1995, vol. 270, 255
- **S. VINJANAMPATHY** ; **J. ANDERS**. Quantum thermodynamics. *Contemporary Physics*, 2016, vol. 57, 545
- **R. ALICKI** ; **M. FANNES**. Entanglement boost for extractable work from ensembles of quantum batteries. *Phys. Rev. E*, 2013, vol. 87, 042123
- **F. CAMPAIOLI** ; **F. A. POLLOCK** ; **S. VINJANAMPATHY**. Thermodynamics in the Quantum Regime. Springer, 2018, 207-225
- **K. V. HOVHANNISYAN** ; **M. PERARNAU-LLOBET** ; **M. HUBER** ; **A. ACÍN**. Entanglement generation is not necessary for optimal work extraction. *Phys. Rev. Lett.*, 2013, vol. 111, 240401
- **F. C. BINDER** ; **S. VINJANAMPATHY** ; **K. MODI** ; **J. GOOLD**. Quantacell: powerful charging of quantum batteries. *New J. Phys.*, 2015, vol. 17, 075015
- **F. CAMPAIOLI** ; **F. A. POLLOCK** ; **F. C. BINDER** ; **L. CÉLERI** ; **J. GOOLD** ; **S. VINJANAMPATHY** ; **K. MODI**. Enhancing the charging power of quantum batteries. *Phys. Rev. Lett.*, 2017, vol. 118, 150601
- **D. FERRARO** ; **M. CAMPISI** ; **G. M. ANDOLINA** ; **V. PELLEGRINI** ; **M. POLINI**. High-power collective charging of a solid-state quantum battery. *Phys. Rev. Lett.*, 2018, vol. 120, 117702
- **G. M. ANDOLINA** ; **D. FARINA** ; **A. MARI** ; **V. PELLEGRINI** ; **V. GIOVANNETTI** ; **M. POLINI**. Charger-mediated energy transfer in exactly solvable models for quantum batteries. *Phys. Rev. B*, 2018, vol. 98, 205423
- **G. M. ANDOLINA** ; **M. KECK** ; **A. MARI** ; **M. CAMPISI** ; **V. GIOVANNETTI** ; **M. POLINI**. Extractable work, the role of correlations, and asymptotic freedom in quantum batteries. *Phys. Rev. Lett.*, 2019, vol. 122, 047702
- **D. FARINA** ; **G. M. ANDOLINA** ; **A. MARI** ; **M. POLINI** ; **V. GIOVANNETTI**. Charger-mediated energy transfer for quantum batteries: An open-system approach. *Phys. Rev. B*, 2019, vol. 99, 035421
- **T. P. LE** ; **J. LEVINSEN** ; **K. MODI** ; **M. M. PARISH** ; **F. A. POLLOCK**. Spin-chain model of a many-body quantum battery. *Phys. Rev. A*, 2018, vol. 97, 022106
- **D. ROSSINI** ; **G. M. ANDOLINA** ; **M. POLINI**. Many-body localized quantum batteries. *Phys. Rev. B*, 2019, vol. 100, 115142
- **S. GHOSH** ; **T. CHANDA** ; **A. SEN DE**. Enhancement in the performance of a quantum battery by ordered and disordered interactions. *Phys. Rev. A*, 2020, vol. 101, 032115
- **J. Q. QUACH** ; **K. E. MCGHEE** ; **L. GANZER** ; **D. M. ROUSE** ; **B. W. LOVETT** ; **E. M. GAUGER** ; **J. KEELING** ; **G. CERULLO** ; **D. G. LIDZEY** ; **T. VIRGILI**. An organic quantum battery. *arXiv:2012.06026*
- **D. ROSSINI** ; **G. M. ANDOLINA** ; **D. ROSA** ; **M. CARREGA** ; **M. POLINI**. Quantum advantage in the charging process of Sachdev-Ye-Kitaev batteries. *Phys. Rev. Lett.*, 2020, vol. 125, 236402
- **E. STRAMBINI** ; **A. LORIO** ; **O. DURANTE** ; **R. CITRO** ; **C. SANZ-FERNÁNDEZ** ; **C. GUARCELLO** ; **I.V. TOKATLY** ; **A. BRAGGIO** ; **M. ROCCI** ; **N. LIGATO**. A Josephson phase battery. *Nature Nanotech.*, 2020, vol. 15, 656
- **P. A. M. DIRAC**. Lectures on Quantum Mechanics. Dover, 1964
- **A. BLAIS** ; **R.-S. HUANG** ; **A. WALLRAFF** ; **S. M. GIRVIN** ; **R. J. SCHOELKOPF**. Cavity quantum electrodynamics for superconducting electrical circuits: An architecture for quantum computation. *Phys. Rev. A*, 2004, vol. 69, 062320
- **A. BLAIS** ; **A. L. GRIMSMO** ; **S. M. GIRVIN** ; **A. WALLRAFF**. Circuit quantum electrodynamics. *Rev. Mod. Phys.*, 2021, vol. 93, 025005
- **J. M. FINK** ; **R. BIANCHETTI** ; **M. BAUR** ; **M. GÖPPL** ; **L. STEFFEN** ; **S. FILIPP** ; **P. J. LEEK** ; **A. BLAIS** ; **A. WALLRAFF**. Dressed collective qubit states and the Tavis-Cummings model in circuit QED. *Phys. Rev. Lett.*, 2009, vol. 103, 083601

- P. WINKEL ; K. BORISOV ; L. GRÜNHAUPT ; D. RIEGER ; M. SPIECKER ; F. VALENTI ; A. V. USTINOV ; W. WERNSDORFER ; I. M. POP. Implementation of a transmon qubit using superconducting granular aluminum. *Phys. Rev. X*, 2020, vol. 10, 031032
- L. GRÜNHAUPT ; M. SPIECKER ; D. GUSENKOVA ; N. MALEEVA ; S. T. SKACEL ; I. TAKMAKOV ; F. VALENTI ; P. WINKEL ; H. ROTZINGER ; A. V. USTINOV. Granular aluminium as a superconducting material for high-impedance quantum circuits. *Nat. Materials*, 2019, vol. 18, 816
- M. LYATTI ; M. A. WOLFF ; I. GUNDAREVA ; M. KRUTH ; S. FERRARI ; R. E. DUNIN-BORKOWSKI ; C. SCHUCK. Energy-level quantization and single-photon control of phase slips in YBa2Cu3O7-x nanowires. *Nat. Communications*, 2020, vol. 11, 763
- B. MÜLLER ; M. KARRER ; F. LIMBERGER ; M. BECKER ; B. SCHRÖPPEL ; C. J. BURKHARDT ; R. KLEINER ; E. GOLDOBIN ; D. KOELLE. Josephson Junctions and SQUIDs created by focused helium-ion-beam irradiation of YBa2Cu3O7. *Phys. Rev. Applied*, 2019, vol. 11, 044082
- F. PRIOLO ; T. GREGORKIEWICZ ; M. GALLI ; T. F. KRAUSS. Silicon nanostructures for photonics and photovoltaics. *Nat. Nanotechnology*, 2014, vol. 9, 19
- S. MOROZOVA ; M. ALIKINA ; A. VINOGRADOV ; M. PAGLIARO. Silicon quantum dots: synthesis, encapsulation, and application in light-emitting diodes. *Front. Chem.*, 2020, vol. 8, 191
- S. TERADA ; Y. XIN ; K.-I. SAITOW. Cost-effective synthesis of silicon quantum dots. *Chem. Mater.*, 2020, vol. 32, 8382
- L. PETIT ; H. G. J. EENINK ; M. RUSS ; W. I. L. LAWRIE ; N. W. HENDRICKX ; S. G. J. PHILIPS ; J. S. CLARKE ; L. M. K. VANDERSYPEN ; M. VELDHORST. Universal quantum logic in hot silicon qubits. *Nature*, 2020, vol. 580, 355
- A. STOCKKLAUSER ; P. SCARLINO ; J. V. KOSKI ; S. GASPARINETTI ; C. K. ANDERSEN ; C. REICHL ; W. WEGSCHEIDER ; T. IHN ; K. ENSSLIN ; A. WALLRAFF. Strong coupling cavity QED with gate-defined double quantum dots enabled by a high impedance resonator. *Phys. Rev. X*, 2017, vol. 7, 011030
- J. V. KOSKI ; A. J. LANDIG ; M. RUSS ; J. C. ABADILLO-URIEL ; P. SCARLINO ; B. KRATOCH-WIL ; C. REICHL ; W. WEGSCHEIDER ; G. BURKARD ; M. FRIESEN. Strong photon coupling to the quadrupole moment of an electron in a solid-state qubit. *Nat. Physics*, 2020, vol. 16, 642
- L. DE TRIZIO ; L. MANNA. Forging colloidal nanostructures via cation exchange reactions. *Chem. Rev.*, 2016, vol. 116, 10852
- L. E BRUHAT ; T. CUBAYNES ; J. J. VIENNOT ; M. C. DARTIAILH ; M. M. DESJARDINS ; A. COTTET ; T. KONTOS. Circuit QED with a quantum-dot charge qubit dressed by Cooper pairs. *Phys. Rev. B*, 2018, vol. 98, 155313
- T. CUBAYNES ; M. R. DELBECQ ; M. C. DAR-TIAILH ; R. ASSOULY ; M. M. DESJARDINS ; L. C. CONTAMIN ; L. E. BRUHAT ; Z. LEGHTAS ; F. MALLET ; A. COTTET. Highly coherent spin states in carbon nanotubes coupled to cavity photons. *npj Quantum Information*, 2019, vol. 5, 47
- Y. BEN ; Z. HAO ; C. SUN ; F. REN ; N. TAN ; Y. LUO. Three-dimensional photonic-crystal cavity with an embedded quantum dot as a nonclassical light emitter. *Opt. Express*, 2004, vol. 12, 5146
- I. FUSHMAN ; D. ENGLUND ; J. VUČKOVIĆ. Coupling of PbS quantum dots to photonic crystal cavities at room temperature. *Appl. Phys. Lett.*, 2005, vol. 87, 241102
- F. S. F. BROSSARD ; X. L. XU ; D. A. WILLIAMS ; M. HADJIPANAYI ; M. HUGUES ; M. HOPKINSON ; X. WANG ; R. A. TAYLOR. Strongly coupled single quantum dot in a photonic crystal waveguide cavity. *Appl. Phys. Lett.*, 2010, vol. 97, 111101
- Quantum optics and cavity QED with quantum dots in photonic crystals. J. VUČKOVIĆ. Quantum Optics and Nanophotonics. Oxford University Press, 2017
- G. SCALARI ; C. MAISSEN ; D. TURČINKOVÁ ; D. HAGENMÜLLER ; S. DE LIBERAT ; C. CIUTI ; C. REICHL ; D. SCHUH ; W. WEGSCHEIDER ; M. BECK. Ultrastrong coupling of the cyclotron transition of a 2D electron gas to a THz metamaterial. *Science*, 2012, vol. 335, 1323
- V. M. MURAVEV ; P. A. GUSIKHIN ; I. V. ANDREEV ; I. V. KUKUSHKIN. Ultrastrong coupling of high-frequency two-dimensional cyclotron plasma mode with a cavity photon. *Phys. Rev. B*, 2013, vol. 8, 045307
- S. SMOLKA ; W. WUESTER ; F. HAUPT ; S. FAELT ; W. WEGSCHEIDER ; A. IMAMOGLU. Cavity quantum electrodynamics with many-body states of a two-dimensional electron gas. *Science*, 2014, vol. 346, 332
- Q. ZHANG ; M. LOU ; X. LI ; J. L. RENO ; W. PAN ; J. D. WATSON ; M. J. MANFRA ; J. KONO. Collective non-perturbative coupling of 2D electrons with high-quality-factor terahertz cavity photons. *Nat. Physics*, 2016, vol. 12, 1005
- S. RAVETS ; P. KNÜPPEL ; S. FAELT ; M. KRONER ; W. WEGSCHEIDER ; A. IMAMOGLU. Polaron Ppolaritons in the integer and fractional quantum Hall regimes. *Phys. Rev. Lett.*, 2018, vol. 120, 057401

- **G. L. PARAVICINI-BAGLIANI** ; **F. APPUGLIESE** ; **E. RICHTER** ; **F. VALMORRA** ; **J. KELLER** ; **M. BECK** ; **N. BARTOLO** ; **C. RÖSSLER** ; **T. IHN** ; **K. ENSSLIN**. Magneto-transport controlled by Landau polariton states. *Nat. Physics*, 2019, vol. 15, 186
- **P. KNÜPPEL** ; **S. RAVETS** ; **M. KRONER** ; **S. FÄLT** ; **W. WEGSCHEIDER** ; **A. IMAMOGLU**. Nonlinear optics in the fractional quantum Hall regime. *Nature*, 2019, vol. 572, 91
- **S. SACHDEV** ; **J. YE**. Gapless spin-fluid ground state in a random quantum Heisenberg magnet. *Phys. Rev. Lett.*, 1993, vol. 70, 3339
- Talks at KITP. **A. Y. KITAEV**. Entanglement in Strongly Correlated Quantum Matter. University of California, 2015
- **Y. GU** ; **A. KITAEV** ; **S. SACHDEV** ; **G. TARNO-POLSKY**. Notes on the complex Sachdev-Ye-Kitaev model. *J. High Energ. Phys.*, 2020, vol. 2020, 157
- **V. ROSENHAUS**. An introduction to the SYK model. *J. Phys. A: Math. Theor.*, 2019, vol. 52, 323001
- **M. FRANZ** ; **M. ROZALI**. Mimicking black hole event horizons in atomic and solid-state systems. *Nat. Reviews Materials*, 2018, vol. 3, 491
- **A. CHEN** ; **R. ILAN** ; **F. DE JUAN** ; **D. I. PIKULIN** ; **M. FRANZ**. Quantum holography in graphene flake with an irregular boundary. *Phys. Rev. Lett.*, 2018, vol. 121, 036403
- **M. I. KATSNELSON** ; **K. S. NOVOSELOV** ; **A. K. GEIM**. Chiral tunnelling and the Klein paradox in graphene. *Nat. Physics*, 2006, vol. 2, 620
- **A. CHEW** ; **A. ESSIN** ; **J. ALICEA**. Approximating the Sachdev-Ye-Kitaev model with Majorana wires. *Phys. Rev. B*, 2017, vol. 96, 121119
- **D. I. PIKULIN** ; **M. FRANZ**. Black hole on a chip: Proposal for a physical realization of the Sachdev-Ye-Kitaev model in a solid-state system. *Phys. Rev. X*, 2017, vol. 7, 031006
- **L. M. K. VANDERSYPEN** ; **I. L. CHUANG**. NMR techniques for quantum control and computation. *Rev. Mod. Phys.*, 2005, vol. 76, 1037
- **J. I. CIRAC** ; **P. ZOLLER**. Quantum Computations with Cold Trapped Ions. *Phys. Rev. Lett.*, 1995, vol. 74, 4091
- **T. MONZ** ; **P. SCHINDLER** ; **J. T. BARREIRO** ; **M. CHWALLA** ; **D. NIGG** ; **W. A. COIS** ; **M. HAR-LANDER** ; **W. HÄNSEL** ; **M. HENNRICH** ; **R. BLATT**. 14-Qubit Entanglement: Creation and Coherence. *Phys. Rev. Lett.*, 2011, vol. 106, 130506
- **L. CHILDRESS** ; **M. G. DUTT** ; **J. TAYLOR** ; **A. ZIBROV** ; **F. JELEZKO** ; **J. WRACHTRUP** ; **P. HEMMER** ; **M. LUKIN**. Coherent dynam- ics of coupled electron and nuclear spin qubits in diamond. *Science*, 2006, vol. 314, 281
- **J. KELLY et al.** State preservation by repetitive error detec- tion in a superconducting quantum circuit. *Nature*, 2015, vol. 519, 66
- **Y. NAKAMURA** ; **Y. A. PASHKIN** ; **J. TSAI**. Coherent control of macroscopic quantum states in a single-Cooper-pair box. *Nature*, 1999, vol. 398, 786
- **Y. MAKHLIN** ; **G. SCHÖN** ; **A. SHNIRMAN**. Quantum-state engineering with Josephson-junction devices. *Rev. Mod. Phys.*, 2001, vol. 73, 357
- **R. HANSON** ; **L. P. KOUWENHOVEN** ; **J. R. PETTA** ; **S. TARUCHA** ; **L. M. K. VANDERSYPEN**. Spins in few-electron quantum dots. *Rev. Mod. Phys.*, 2007, vol. 79, 1217
- **F. A. ZWANENBURG** ; **A. S. DZURAK** ; **A. MORELLO** ; **M. Y. SIM- MONS** ; **L. C. HOLLEN-BERG** ; **G. KLIMECK** ; **S. ROGGE** ; **S. N. COP-PERSMITH** ; **M. A. ERIKSSON**. Silicon quantum electronics. *Rev. Mod. Phys.*, 2013, vol. 85, 961
- **A. WALLRAFF et al.** *Nature*, 2004, vol. 431, 162-167
- **J. M. CHOW** ; **A. D. CRCOLES** ; **J. M. GAMBETTA** ; **C. RIGETTI** ; **B. R. JOHNSON** ; **J. A. SMOLIN** ; **J. R. ROZEN** ; **G. A. KEEFE** ; **M. B. ROTHWELL** ; **M. B. KETCHEN et al.** *Physical Review Letters*, 2011, vol. 107
- **D. C. MCKAY** ; **S. FILIPP** ; **A. MEZZACAPO** ; **E. MAGESAN** ; **J. M. CHOW** ; **J. M. GAMBETTA**. *Physical Review Applied*, 2016, vol. 6
- **M. GANZHORN** ; **D. EGGER** ; **P. BARKOUTSOS** ; **P. OLLITRAULT** ; **G. SALIS** ; **N. MOLL** ; **M. ROTH** ; **A. FUHRER** ; **P. MUELLER** ; **S. WO- ERNER et al.** *Physical Review Applied*, 2019, vol. 11
- **M. REAGOR** ; **C. B. OSBORN** ; **N. TEZAK** ; **A. STALEY** ; **G. PRAWIROATMODJO** ; **M. SCHEER** ; **N. ALIDOUST** ; **E. A. SETE** ; **N. DIDIER** ; **M. P. DA SILVA et al.** *Science Advances*, 2018, vol. 4, eaao3603
- **L. DICARLO** ; **J. M. CHOW** ; **J. M. GAMBETTA** ; **L. S. BISHOP** ; **B. R. JOHNSON** ; **D. I. SCHUSTER** ; **J. MAJER** ; **A. BLAIS** ; **L. FRUN- ZIO** ; **S. M. GIRVIN et al.** *Nature*, 2009, vol. 460, 240244
- **R. BARENDS** ; **J. KELLY** ; **A. MEGRANT** ; **A. VEITIA** ; **D. SANK** ; **E. JEFFREY** ; **T. C. WHITE** ; **J. MUTUS** ; **A. G. FOWLER** ; **B. CAMPBELL et al.** *Nature*, 2014, vol. 508, 500503
- **M. ROL** ; **F. BATTISTEL** ; **F. MALINOWSKI** ; **C. BULTINK** ; **B. TARASINSKI** ; **R. VOLLMER** ; **N. HAIDER** ; **N. MUTHUSUBRAMA- NIAN** ; **A. BRUNO** ; **B. TERHAL et al.** *Physical Review Letters*, 2019, vol. 123
- **F. ARUTE** ; **K. ARYA** ; **R. BABBUSH** ; **D. BACON** ; **J. C. BARDIN** ; **R. BARENDS** ; **R. BISWAS** ; **S. BOIXO** ; **F. G. S. L. BRANDAO** ; **D. A. BUELL et al.** *Nature*, 2019, vol. 574, 505510
- **FANG, T.** ; **GAO, X.** ; **WANG, X.** ; **LIU, J.** Design of gate-tunable graphene electro-optical reflectors based on an optical slot-antenna coupled cavity. *Journal of Physics: Photonics*, 2021, vol. 3 (4), 045003

- **KAPLAN, A.E.** ; **BASSI, P.** ; **BELLANCA, G.** Tunable narrow band optical reflector based on indirectly coupled micro ring resonators. *Optics Express*, 2020, vol. 28 (9), 13497-13515